# EUROPEAN PATENT APPLICATION

(11) **EP 2 958 336 A1**
(43) Date of publication of application: **23.12.2015**
(21) Application number: 14751463.2
(22) Date of filing: 03.02.2014
(51) Int. Cl.: H04N 21/454

(54) **INFORMATION PROCESSING DEVICE, INFORMATION PROCESSING METHOD, AND INFORMATION PROCESSING SYSTEM**

(30) Priority: 12.02.2013 US 201361763761 P; 26.06.2013 US 201313927667
(71) Applicant: Sony Corporation, Tokyo 108-0075 (JP)
(72) Inventor: YAMAGISHI, Yasuaki, Tokyo 108-0075 (JP)
(74) Representative: Witte, Weller & Partner Patentanwälte mbB
(86) International application number: PCT/JP2014/052409
(87) International publication number: WO 2014/125947

(57) **Abstract**

The present technique relates to an information processing devices, an information processing methods, and an information processing systems that enable acquisition of content according to needs at the time. A receiving section receives question information that is transmitted from a server and represents a question about a preference of a user. A processing executing section generates user-side answer information representing an answer of the user to the question and stores it in an accumulator in which the question information is stored. A matching section acquires content distributed from the server by performing matching between the user-side answer information and provider-side answer information that is transmitted from the server and represents an answer set to the question by a provider that provides the content. The processing executing section performs at least readout or update of the question information and/or the user-side answer information stored in the accumulator. The present technique can be applied to a receiving device that receives a digital television program.

## Description

### [Technical Field]

The present technique relates to information processing devices, information processing methods, and information processing systems, and particularly to an information processing device, an information processing method, and an information processing system that enable acquisition of content according to metadata.

### [Background Art]

In recent years, because the amount of information that can be simultaneously broadcast has dramatically increased along with digitalization of television broadcasting, simultaneous broadcasting of various kinds of data together with a television program (content) viewed in real time is being carried out.

Furthermore, there has been proposed a content download service in which the above-described television broadcasting and the Internet, which enables high-speed data download, are used as communication paths of content (refer to e.g. PTL 1).

Incidentally, in a general content download service, a filtering attribute (referred to also as filtering index, filtering metadata, etc.) set in a server on the side of a provider (content provider or service provider) that provides (distributes) content is given to the content as metadata. This allows filtering (will or choice) of content in a client that receives (acquires) the content.

The filtering attribute is set as a value about an element of metadata selected among metadata sets defined by a standards organization such as the ATSC (Advanced Television Standard Committee) or the ARIB (Association of Radio Industries and Businesses).

Specifically, for example, content for which "viewing target" is selected as an element of metadata and that is given a filtering attribute in which "teenagers" is set as the value about the element of the metadata is provided to a client that performs filtering to acquire "content for viewers whose 'viewing target is teenagers."'

### [Citation List]

### [Patent Literature]

[PTL 1]
Japanese Patent Laid-Open No. 2010-21988

### [Summary]

### [Technical Problem]

However, metadata (filtering attribute) that is not included in the metadata set defined by the standards organization is not given to content.

For example, even if the provider side wants to distribute "content for viewers whose 'viewing target is teenagers' and who is 'interested in job hunting,'" a filtering attribute in which "interested in job hunting" is set as an element of metadata cannot be given to content if "whether or not being interested in job hunting" does not exist as an element of metadata in the metadata set defined by the standards organization.

Therefore, on the provider side, content to which viewer's concern according to needs at the time (e.g. in consideration of the trend) is given as metadata cannot be distributed.

Furthermore, in such a case, on the client side, filtering cannot be so performed as to acquire content according to needs at the time.

The present technique is made in view of such circumstances and is to allow acquisition of content according to needs at the time.

### [Solution to Problem]

An information processing device of one aspect of the present technique includes a receiving section that receives question information that is transmitted from a server and represents a question about a preference of a user, a processing executing section that generates user-side answer information representing an answer of the user to the question and stores the user-side answer information in an accumulator in which the question information is stored, and a matching section that acquires content distributed from the server by performing matching between the user-side answer information and provider-side answer information that is transmitted from the server and represents an answer set to the question by a provider that provides the content. The processing executing section performs at least readout or update of the question information and/or the user-side answer information stored in the accumulator.

The processing executing section can be made to be provided as a Web application and perform at least readout or update of the question information and/or the user-side answer information stored in the accumulator by calling a predetermined API (Application Programming Interface).

One or more pieces of the question information and/or the user-side answer information can be made to be stored in the accumulator as one table.

The processing executing section can be made to perform readout or removal of the table that corresponds based on a table ID to identify the table.

The processing executing section can be made to perform generation or update of the table depending on presence or absence of the table in the accumulator, and the version of the table updated can be made to be updated.

The processing executing section can be made to perform readout of the question information and/or the user-side answer information that corresponds based on a question information ID to identify the question information.

The processing executing section can be made to perform update of only the user-side answer information depending on presence or absence of the question information and/or the user-side answer information in the accumulator, and a version of the table including the user-side answer information updated can be made not to be updated.

A session of the accumulator can be made to be established with only one of the Web application.

The accumulator can be further provided in the information processing device.

An information processing method of one aspect of the present technique includes the steps of receiving question information that is transmitted from a server and represents a question about a preference of a user, generating user-side answer information representing an answer of the user to the question and storing the user-side answer information in an accumulator in which the question information is stored, and acquiring content distributed from the server by performing matching between the user-side answer information and provider-side answer information that is transmitted from the server and represents an answer set to the question by a provider that provides the content. At least readout or update of the question information and/or the user-side answer information stored in the accumulator is performed.

An information processing system of one aspect of the present technique is a transmitting/receiving system composed of a transmitting device that distributes content and a receiving device that acquires the content distributed from the transmitting device. The transmitting device includes question generating means for generating question information that is information representing a question about a preference of a user of the receiving device, and transmitting means for transmitting, to the receiving device, the question information and provider-side answer information representing an answer set to the question by a provider that provides the content. The receiving device includes a receiving section that receives the question information transmitted from the transmitting device, a processing executing section that generates user-side answer information representing an answer of the user to the question and stores the user-side answer information in an accumulator in which the question information is stored, and a matching section that acquires the content distributed from the transmitting device by performing matching between the user-side answer information and the provider-side answer information transmitted from the transmitting device. The processing executing section performs at least readout or update of the question information and/or the user-side answer information stored in the accumulator.

In one aspect of the present technique, the question information that is transmitted from the server and represents a question about the preference of the user is received. The user-side answer information representing an answer of the user to the question is generated and is stored in the accumulator in which the question information is stored. Matching between the user-side answer information and the provider-side answer information that is transmitted from the server and represents an answer set to the question by the provider that provides the content is performed and thereby content distributed from the server is acquired. At least readout or update of the question information and/or the user-side answer information stored in the accumulator is performed.

### [Advantageous Effect of Invention]

According to one aspect of the present technique, content according to needs at the time can be acquired.

### [Brief Description of Drawings]

[FIG. 1]

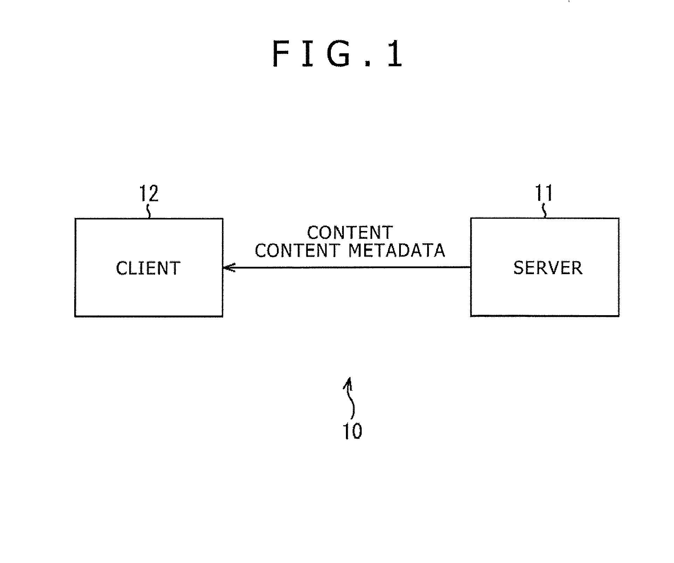

   FIG. 1 is a block diagram showing a configuration example of a broadcast system according to one embodiment of the present technique.
[FIG. 2]

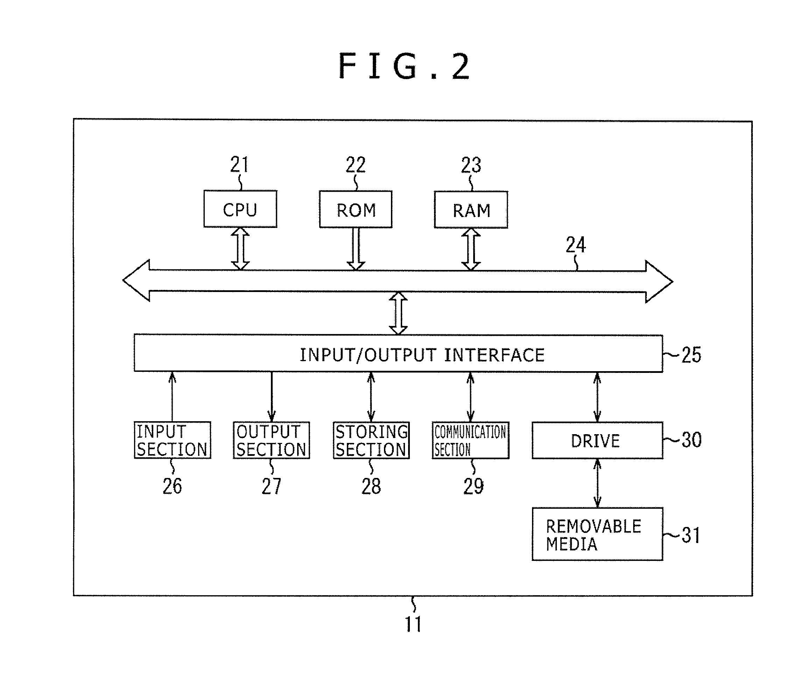

   FIG. 2 is a block diagram showing a hardware configuration example of a server.
[FIG. 3]

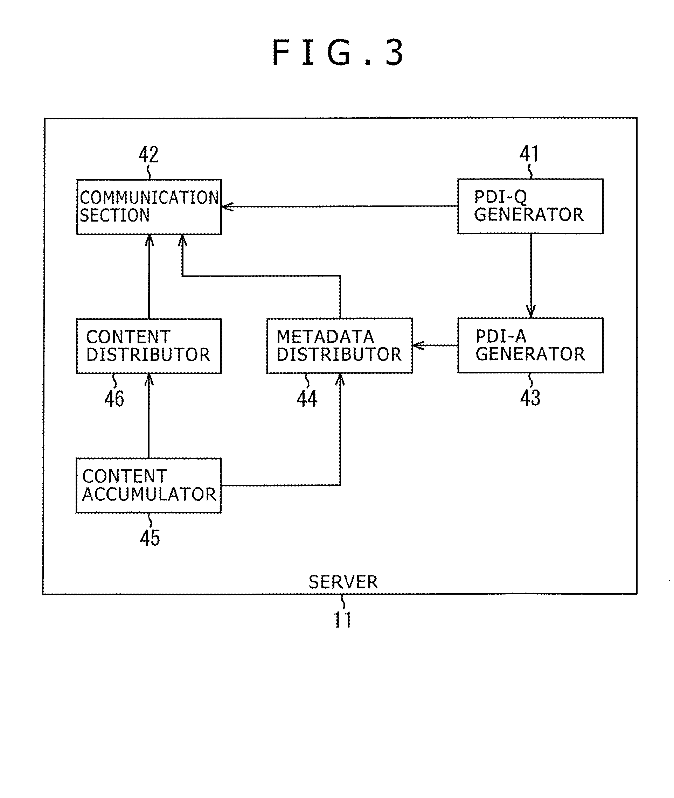

   FIG. 3 is a block diagram showing a functional configuration example the server.
[FIG. 4]

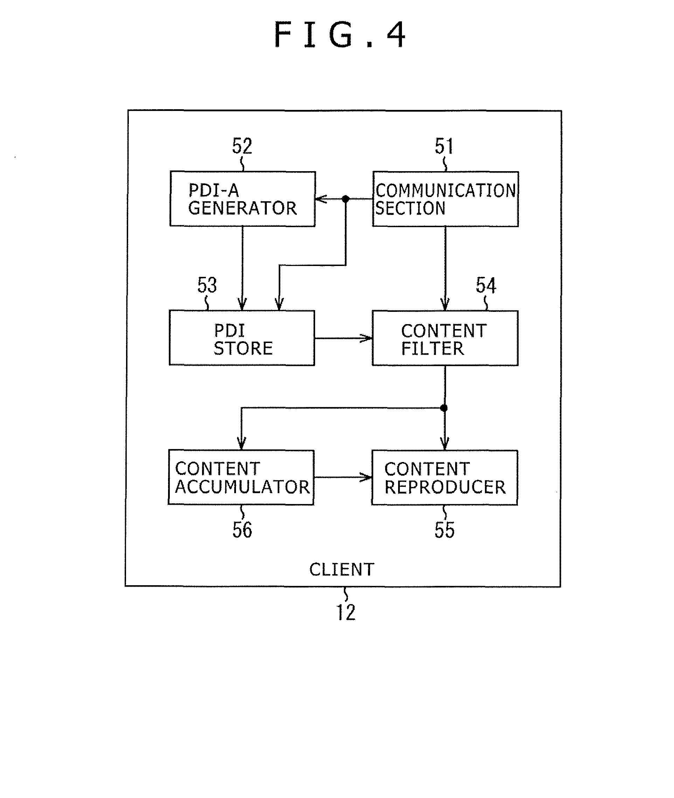

   FIG. 4 is a block diagram showing a functional configuration example of a client.
[FIG. 5]

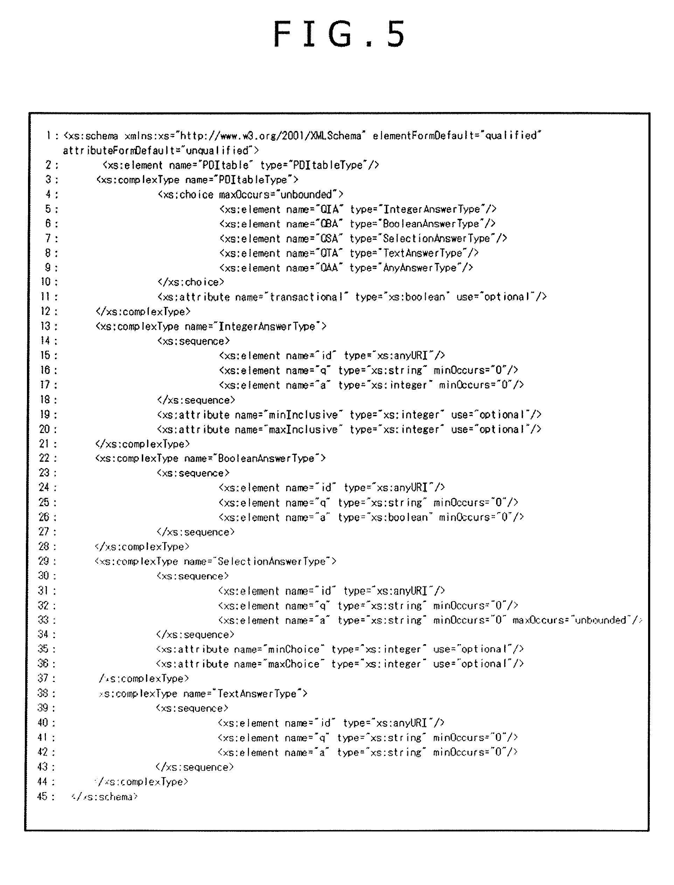

   FIG. 5 is a diagram explaining an example of the syntax of the XML schema.
[FIG. 6]

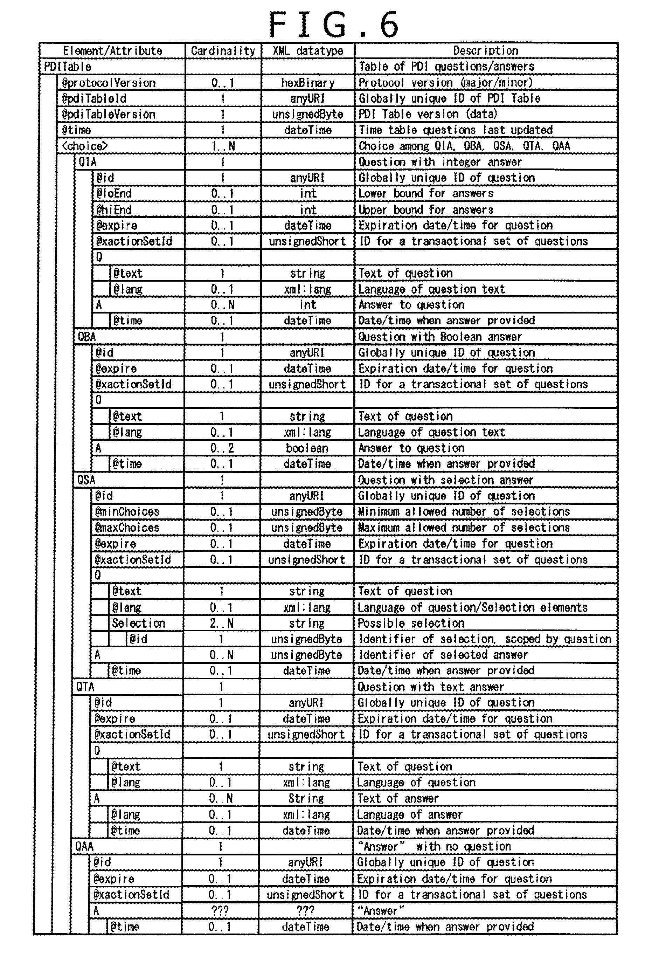

   FIG. 6 is a diagram explaining an example of the XML schema of a PDI table.
[FIG. 7]

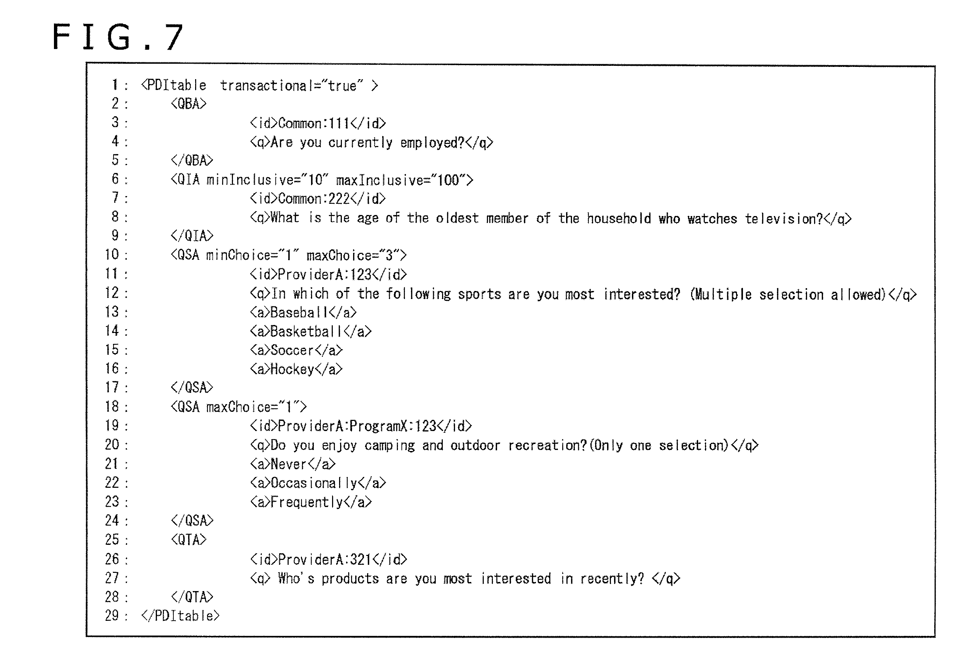

   FIG. 7 is a diagram explaining an example of a PDI-Q.
[FIG. 8]

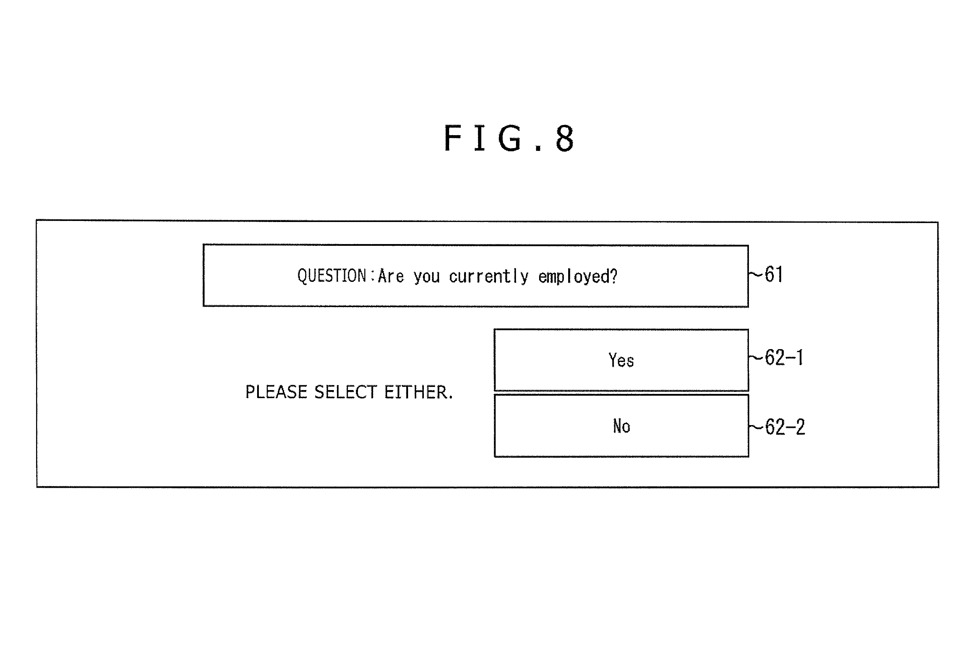

   FIG. 8 is a diagram explaining a screen display example in a dialogue with a user.
[FIG. 9]

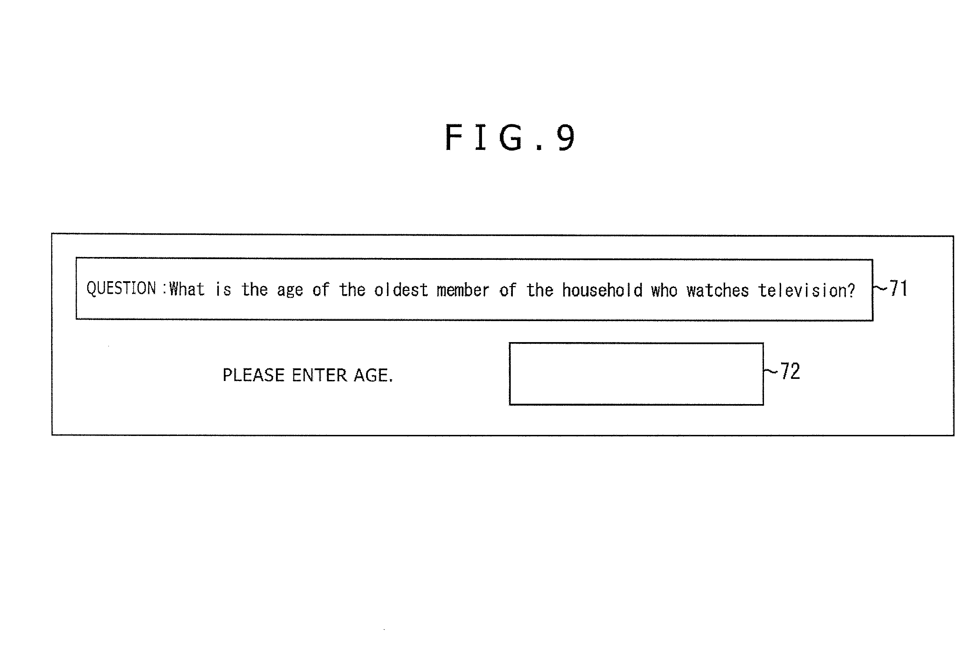

   FIG. 9 is a diagram explaining a screen display example in a dialogue with a user.
[FIG. 10]

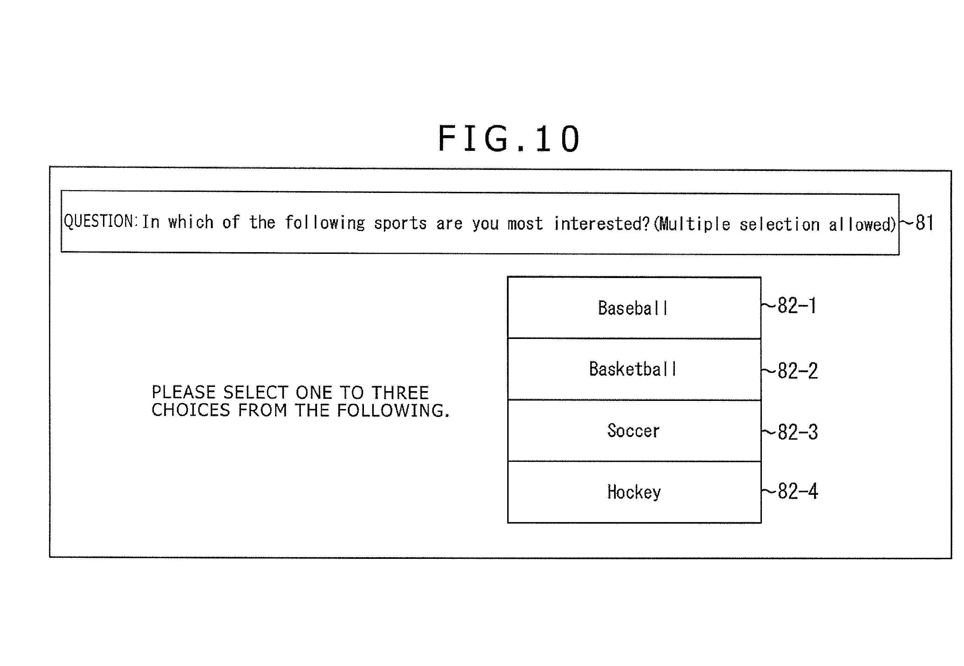

   FIG. 10 is a diagram explaining a screen display example in a dialogue with a user.
[FIG. 11]

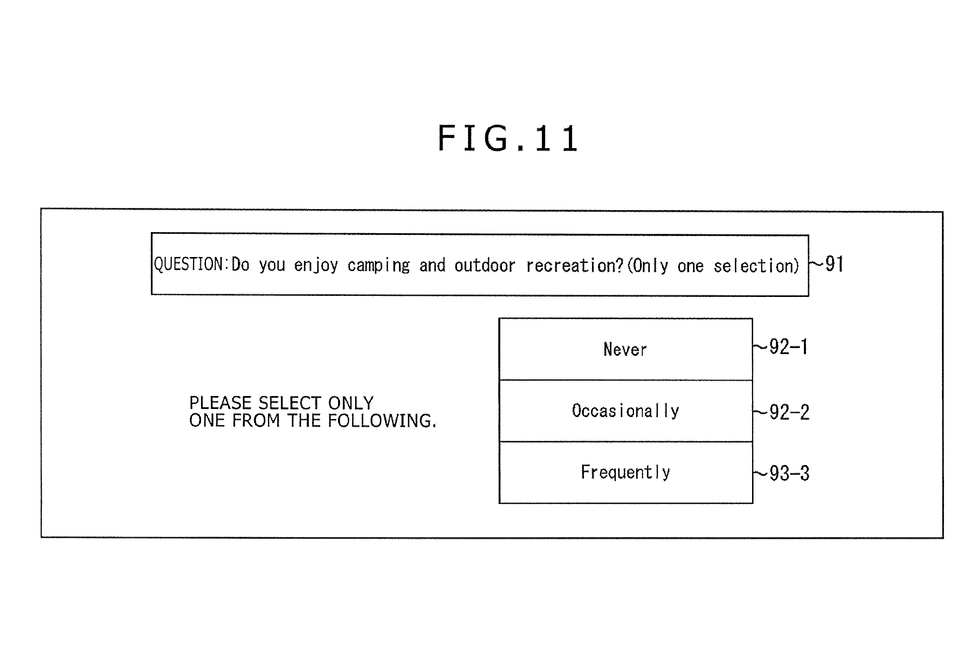

   FIG. 11 is a diagram explaining a screen display example in a dialogue with a user.
[FIG. 12]

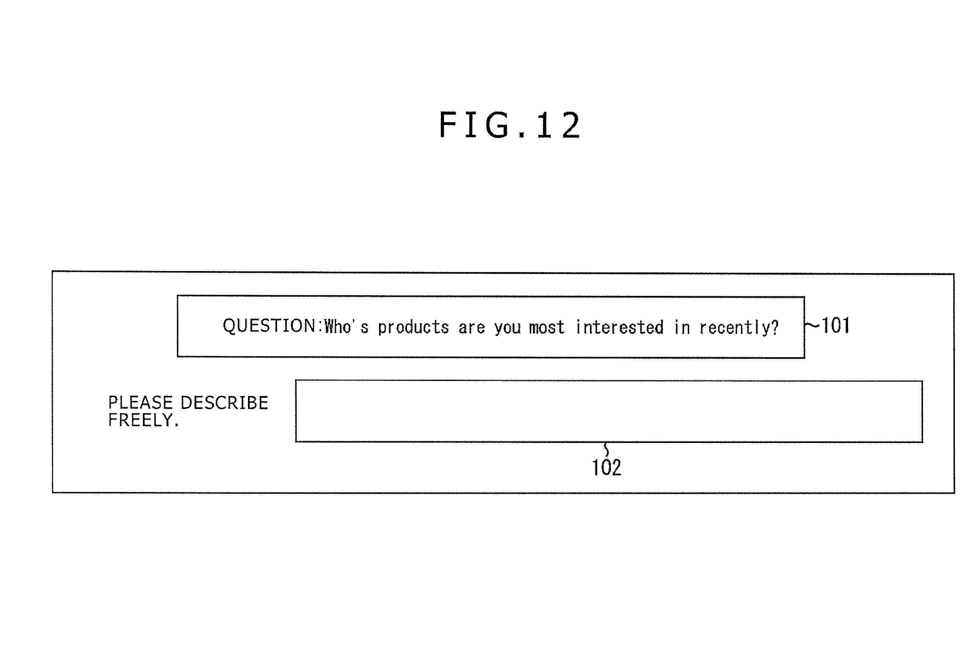

   FIG. 12 is a diagram explaining a screen display example in a dialogue with a user.
[FIG. 13]

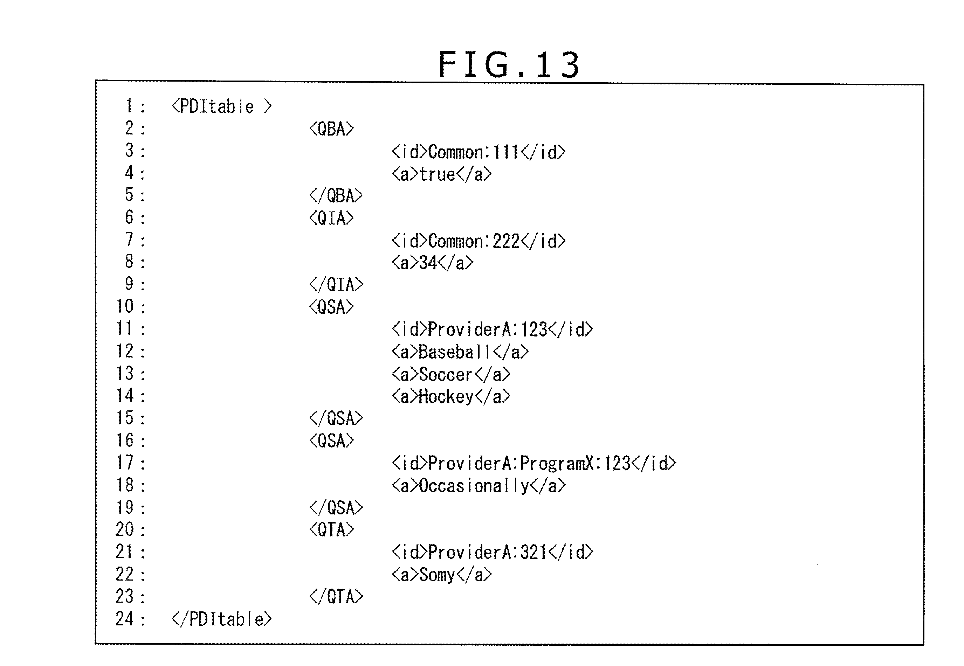

   FIG. 13 is a diagram explaining an example of a PDI-A.
[FIG. 14]

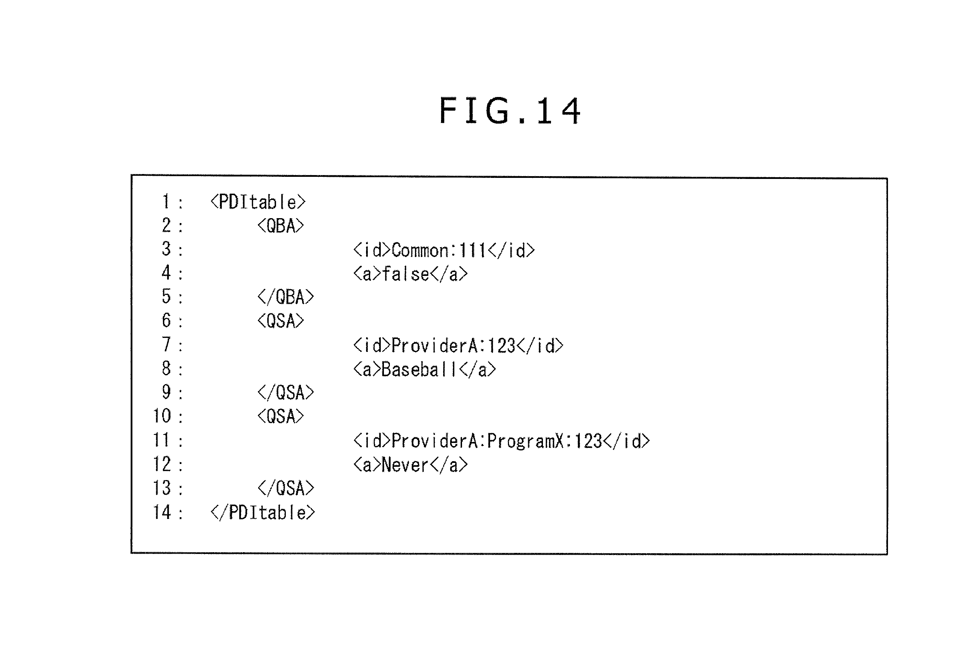

   FIG. 14 is a diagram explaining an example of a provider-side PDI-A.
[FIG. 15]

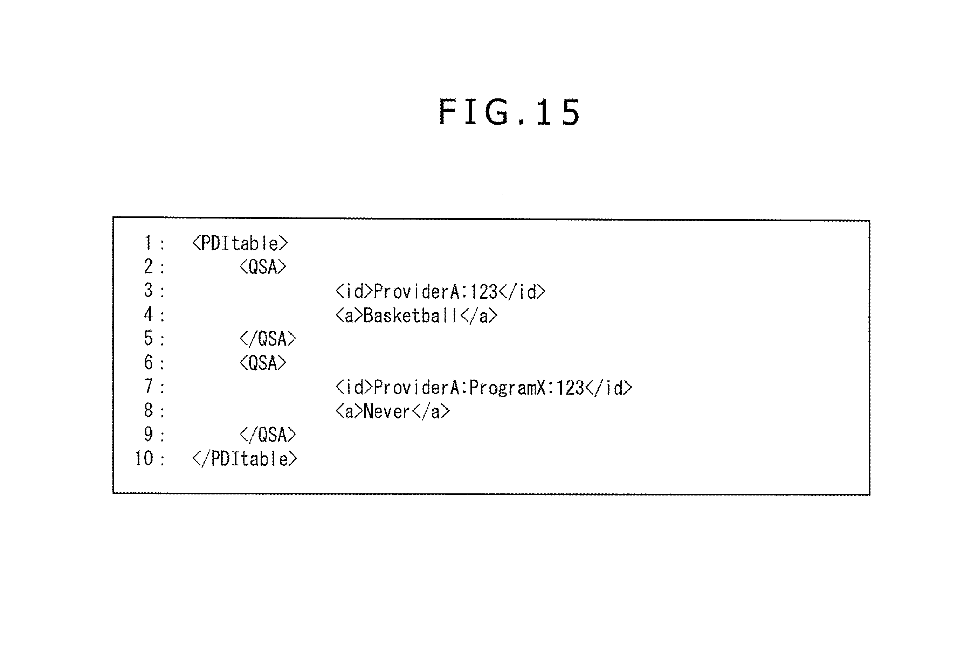

   FIG. 15 is a diagram explaining an example of the provider-side PDI-A.
[FIG. 16]

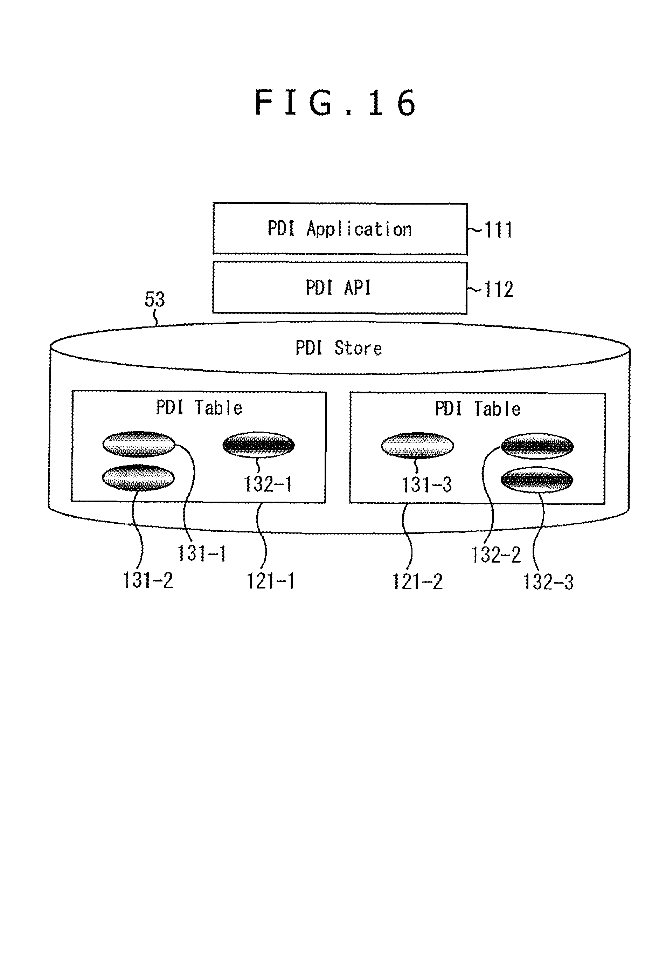

   FIG. 16 is a diagram explaining the functions of a PDI API.
[FIG. 17]

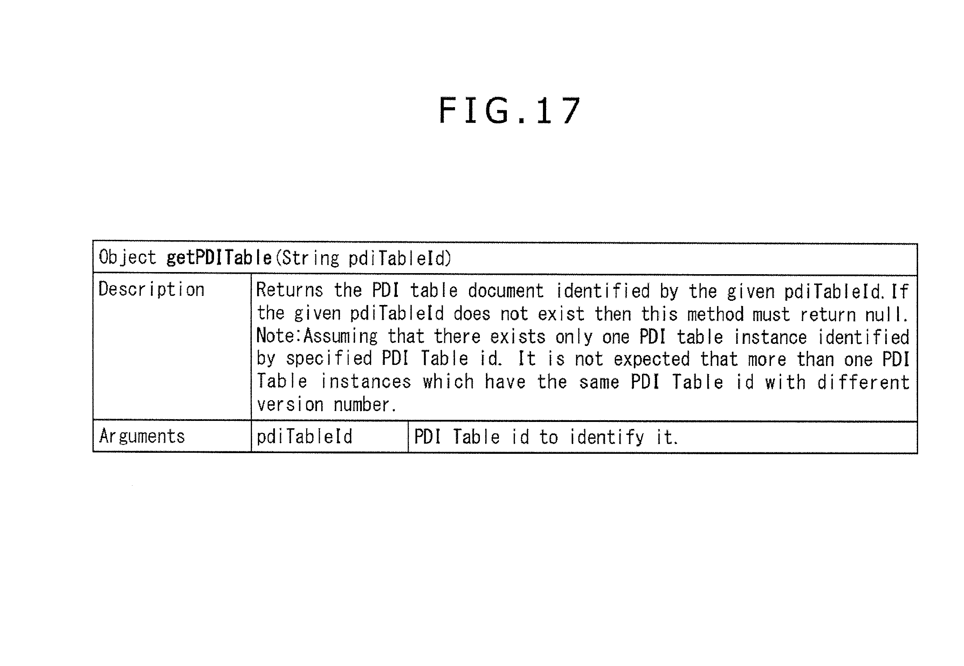

   FIG. 17 is a diagram explaining getPDITable().
[FIG. 18]

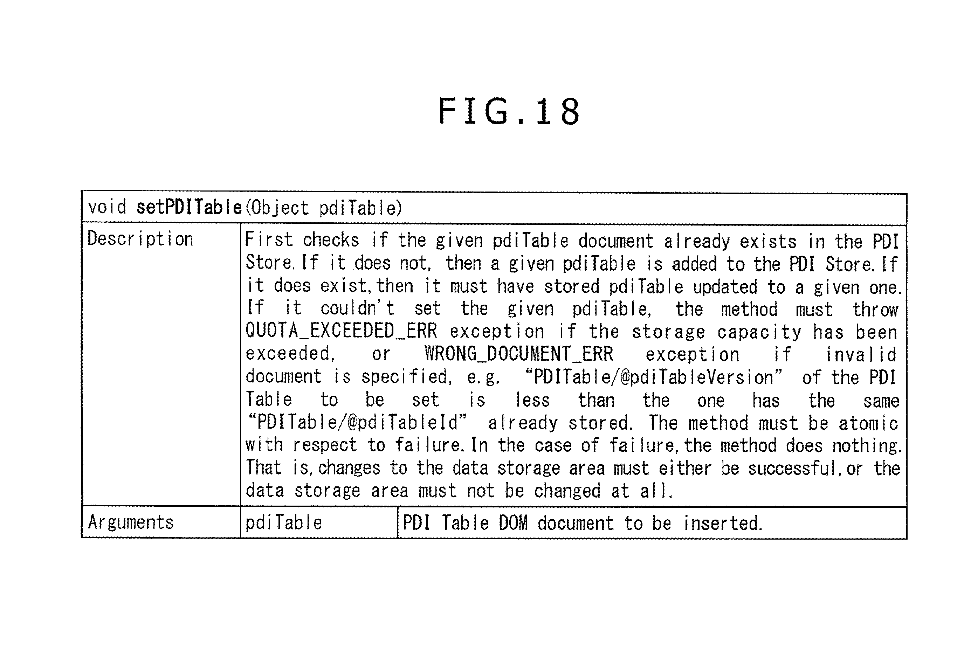

   FIG. 18 is a diagram explaining setPDITable().
[FIG. 19]

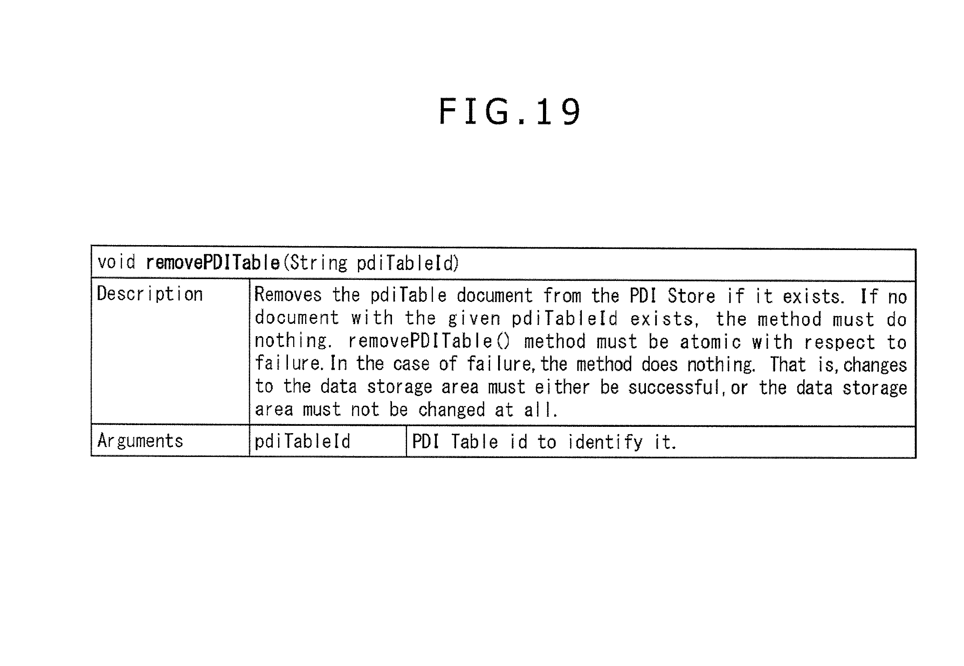

   FIG. 19 is a diagram explaining removePDITable().
[FIG. 20]

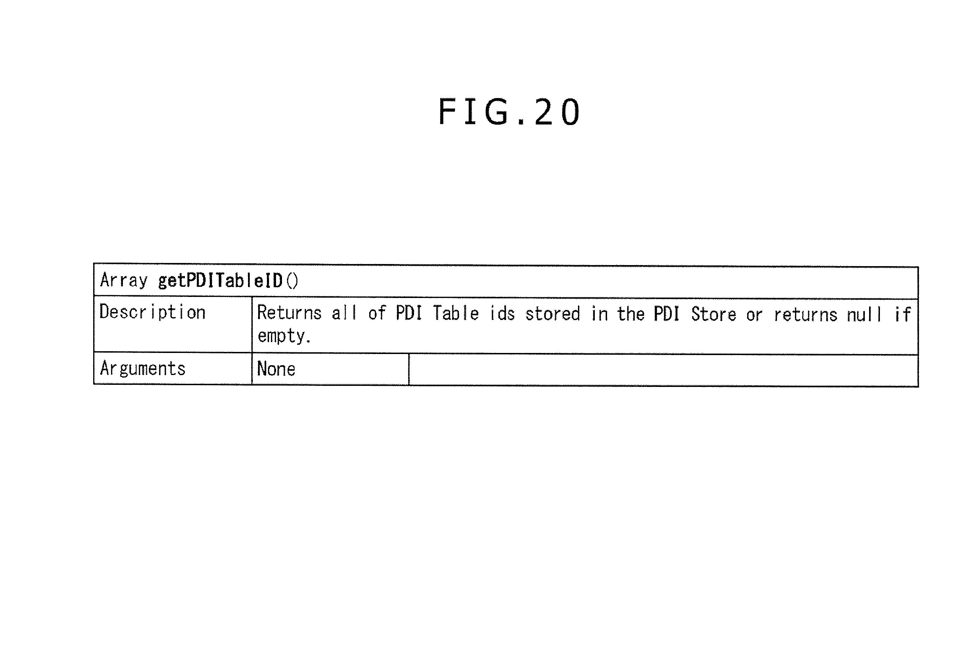

   FIG. 20 is a diagram explaining getPDITableID().
[FIG. 21]

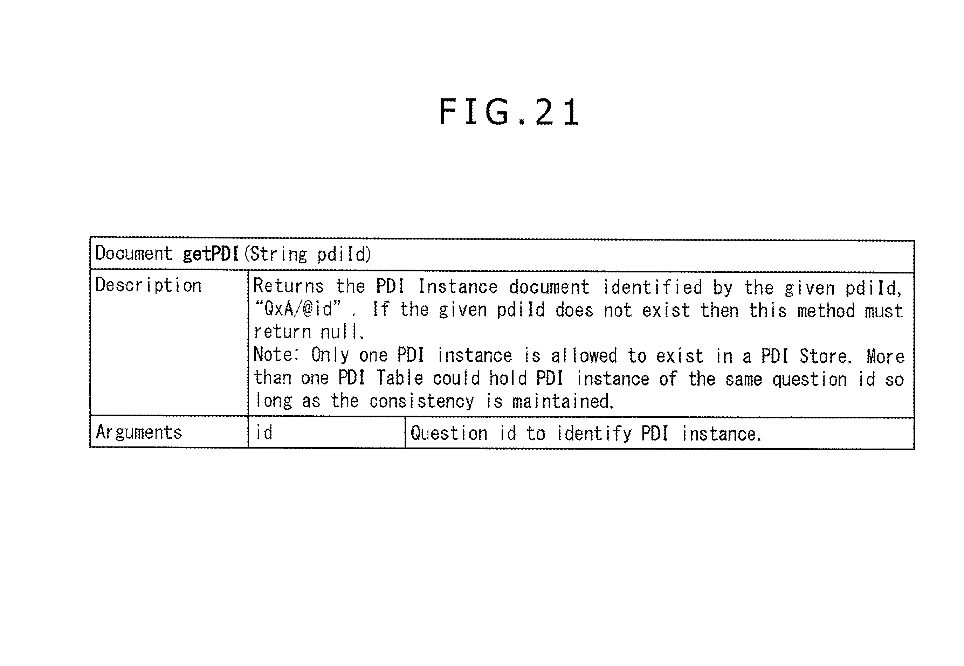

   FIG. 21 is a diagram explaining getPDI().
[FIG. 22]

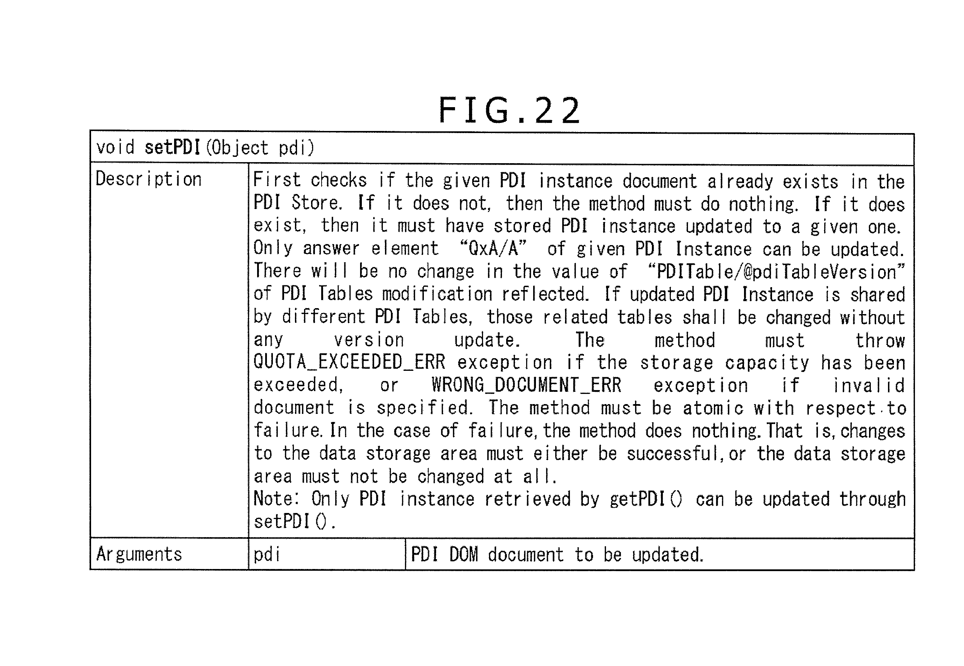

   FIG. 22 is a diagram explaining setPDI().
[FIG. 23]

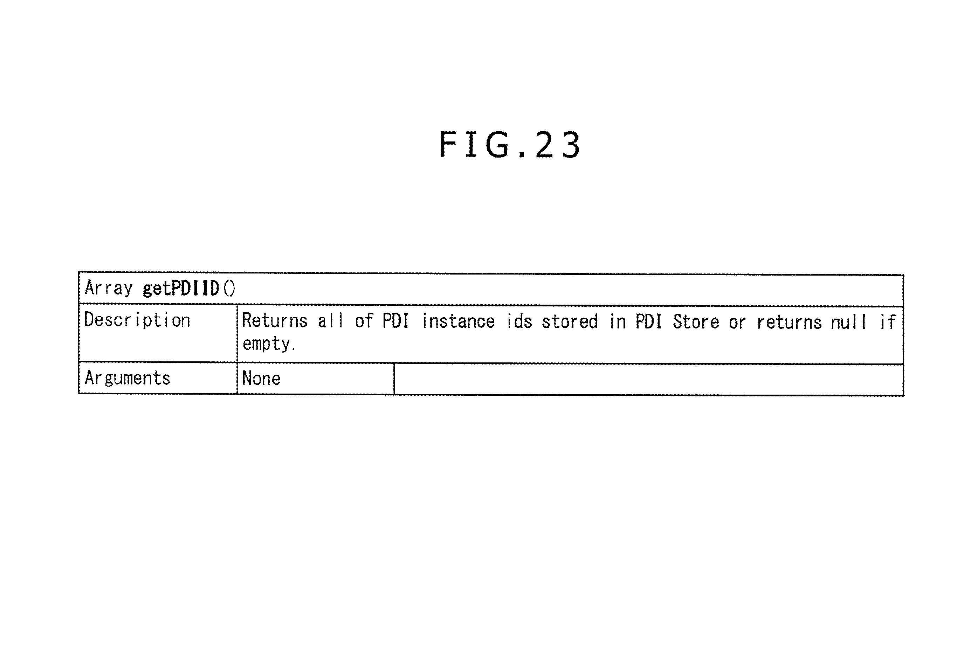

   FIG. 23 is a diagram explaining getPDIID().
[FIG. 24]

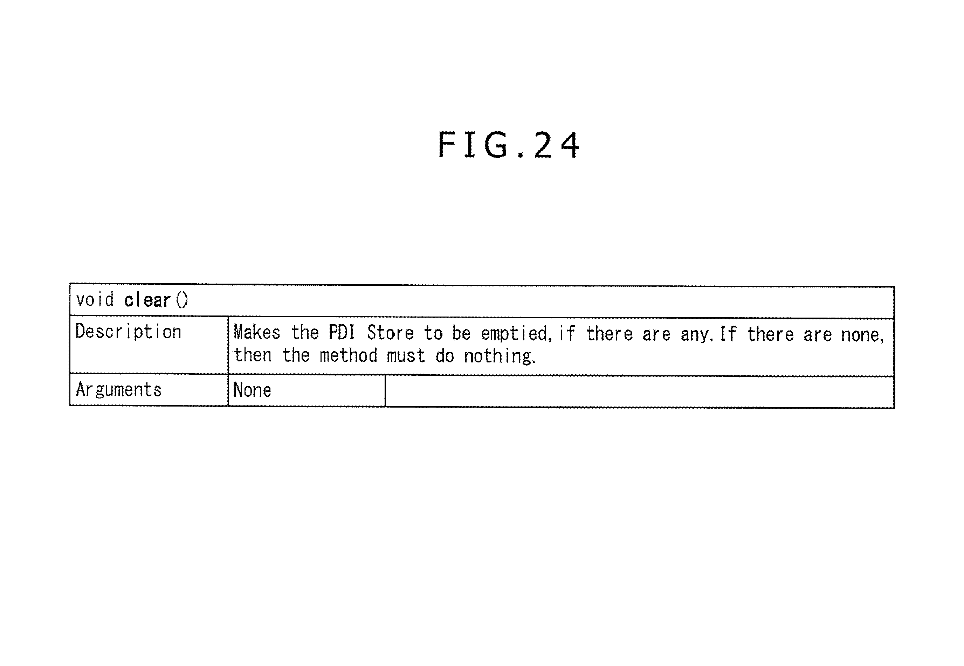

   FIG. 24 is a diagram explaining clear().
[FIG. 25]

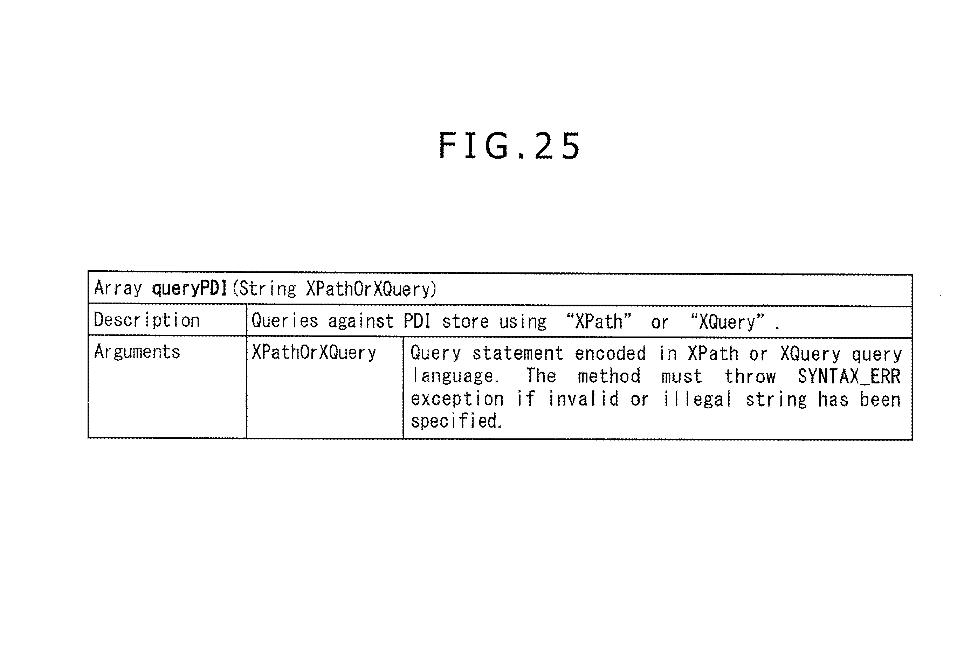

   FIG. 25 is a diagram explaining queryPDI().
[FIG. 26]

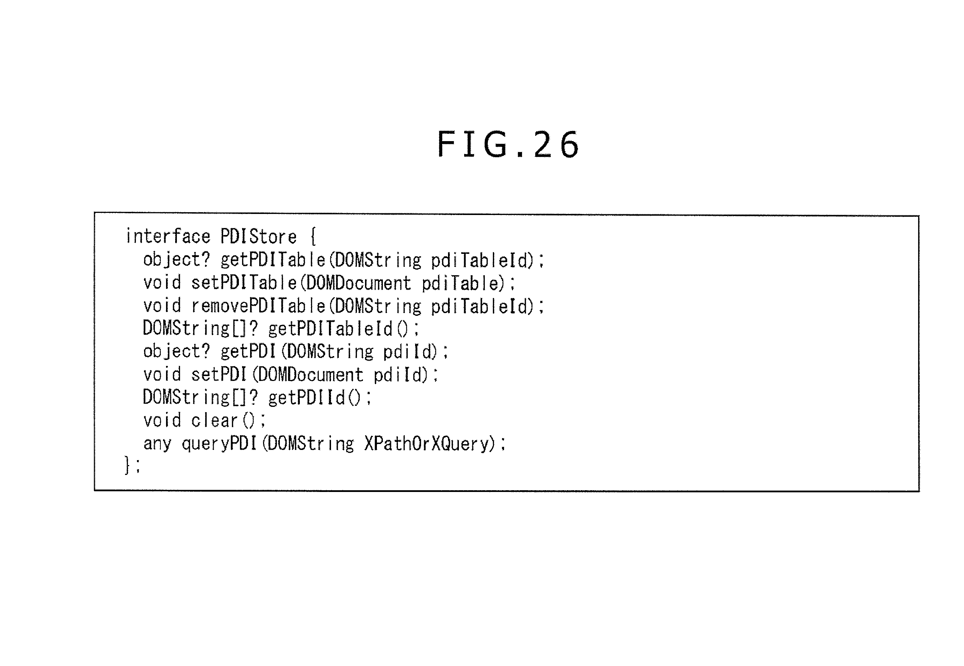

   FIG. 26 is a diagram showing a definition of the PDI API by an IDL.
[FIG. 27]

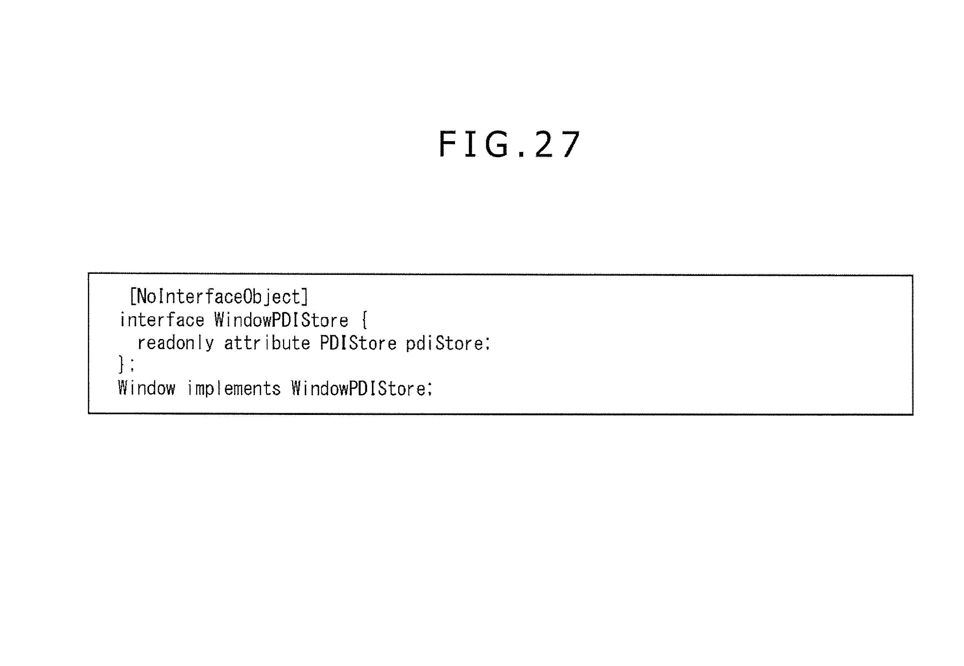

   FIG. 27 is a diagram showing a definition of the PDI API by the IDL.
[FIG. 28]

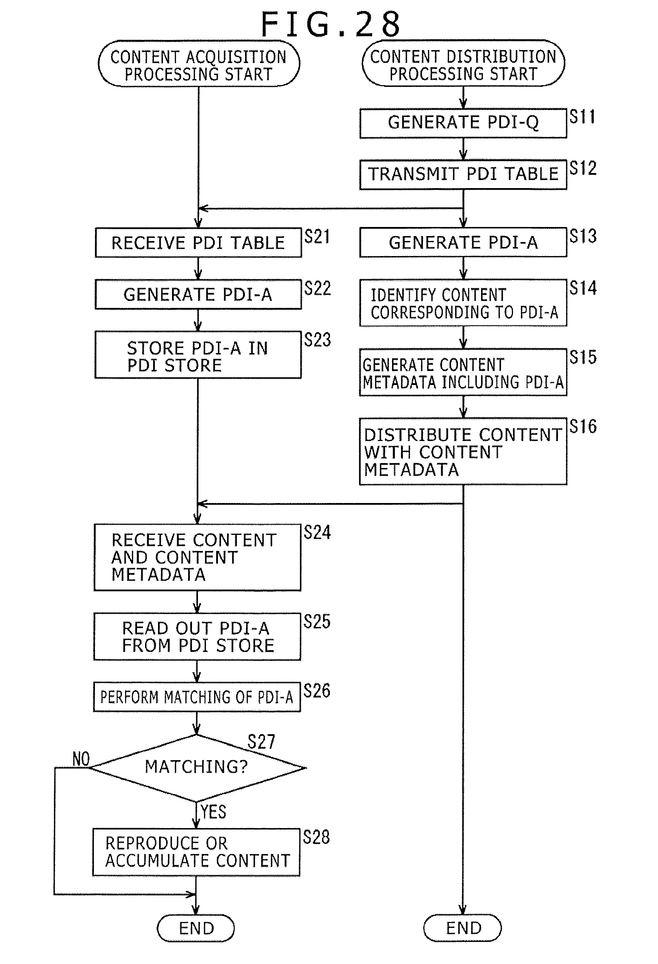

   FIG. 28 is a flowchart explaining transmission/reception processing of content.
[FIG. 29]

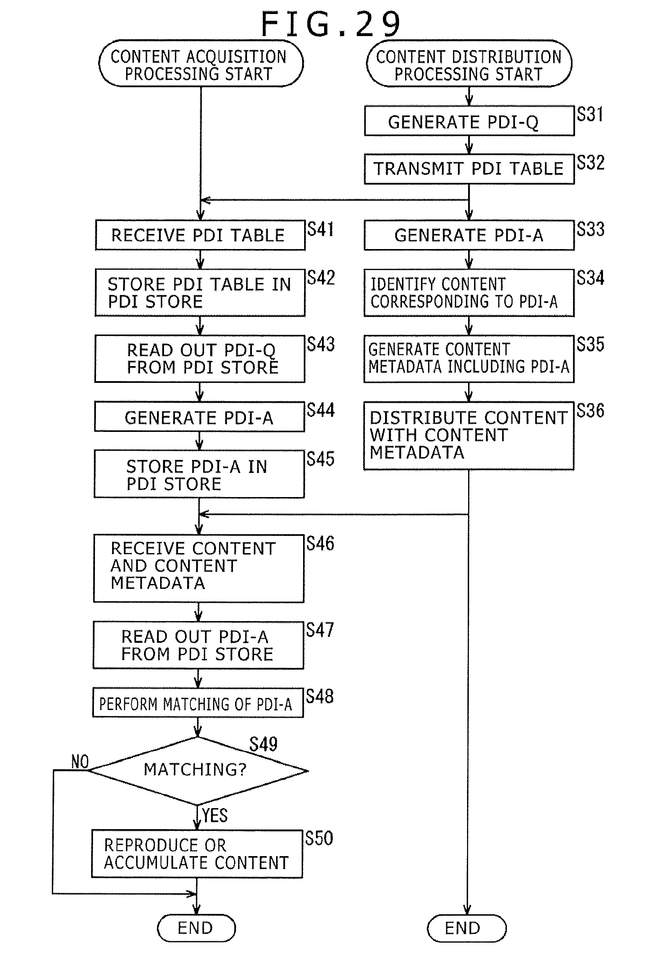

   FIG. 29 is a flowchart explaining transmission/reception processing of content.
[FIG. 30]

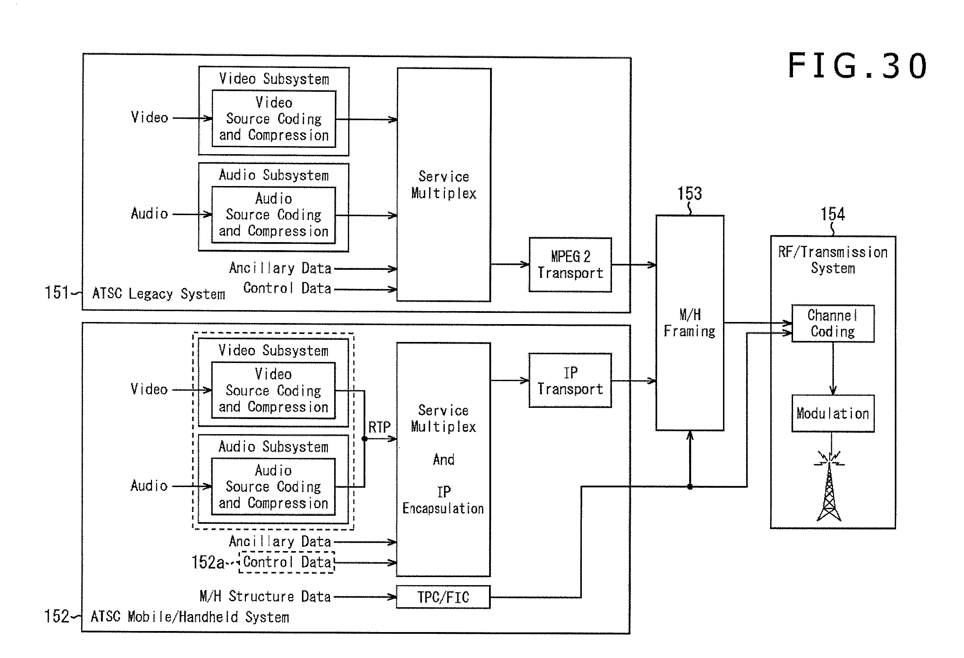

   FIG. 30 is a block diagram showing a configuration example of a broadcast system to which the present technique is applied and that carries out broadcasting by an ATSC-M/H system.
[FIG. 31]

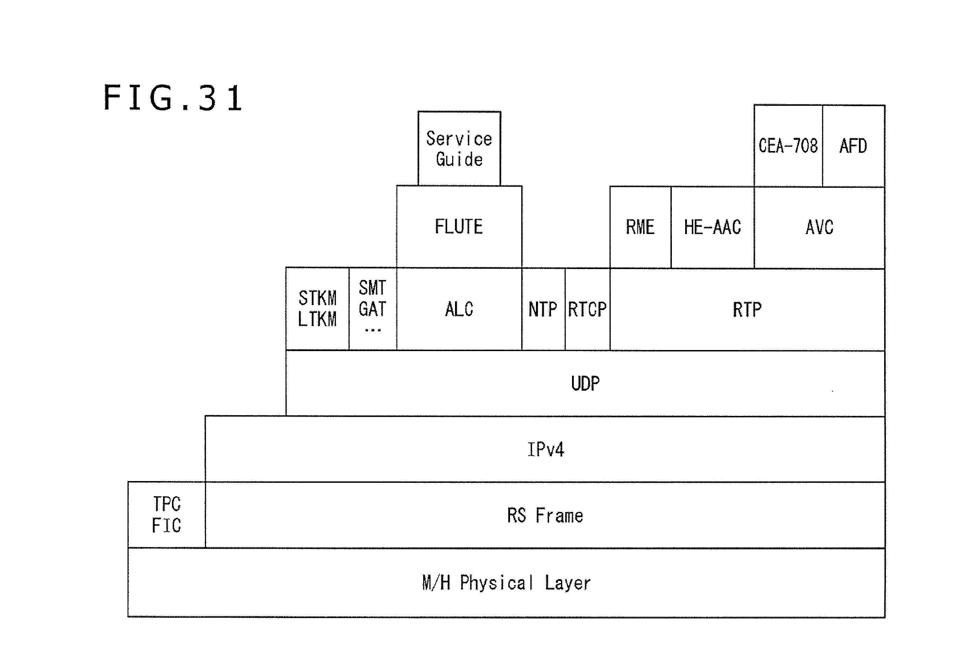

   FIG. 31 is a diagram showing a protocol stack in a signal of a broadcast wave transmitted by the ATSC-M/H system.
[FIG. 32]

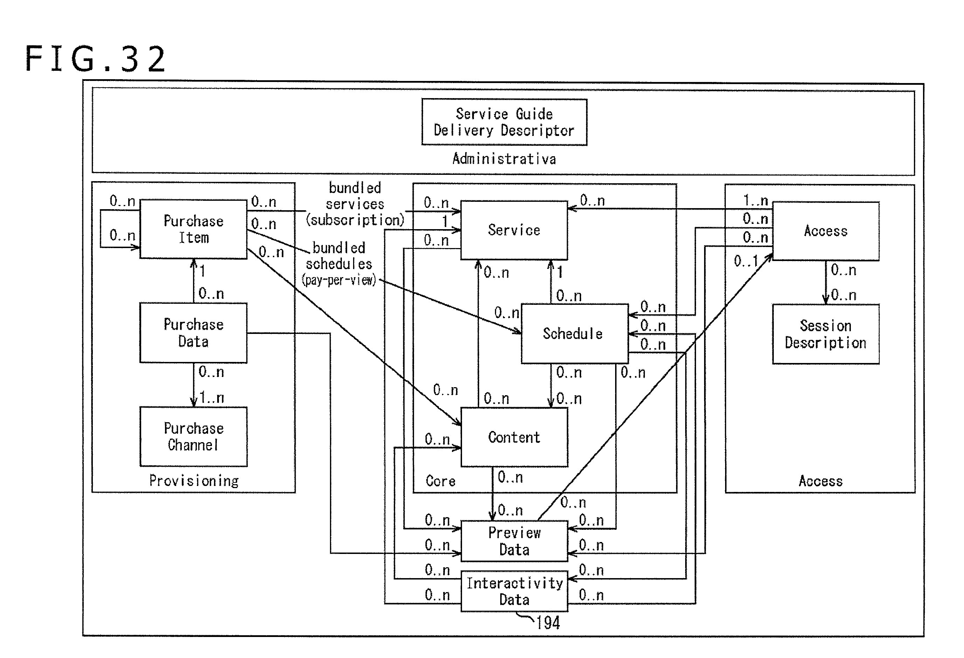

   FIG. 32 is a diagram showing the data configuration of Service Guide.
[FIG. 33]

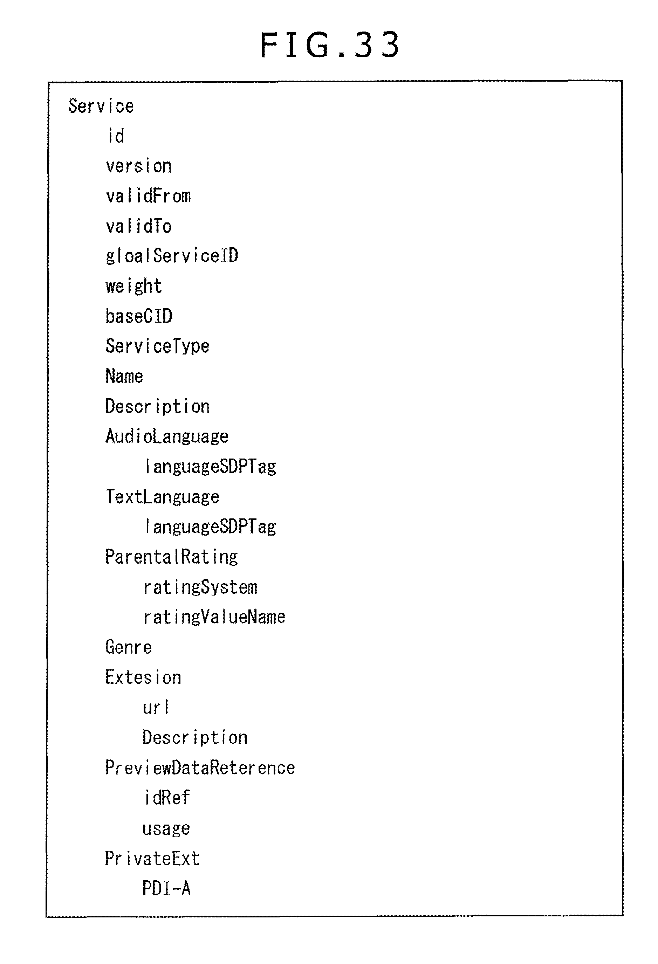

   FIG. 33 is a diagram explaining the configuration of a Service fragment.
[FIG. 34]

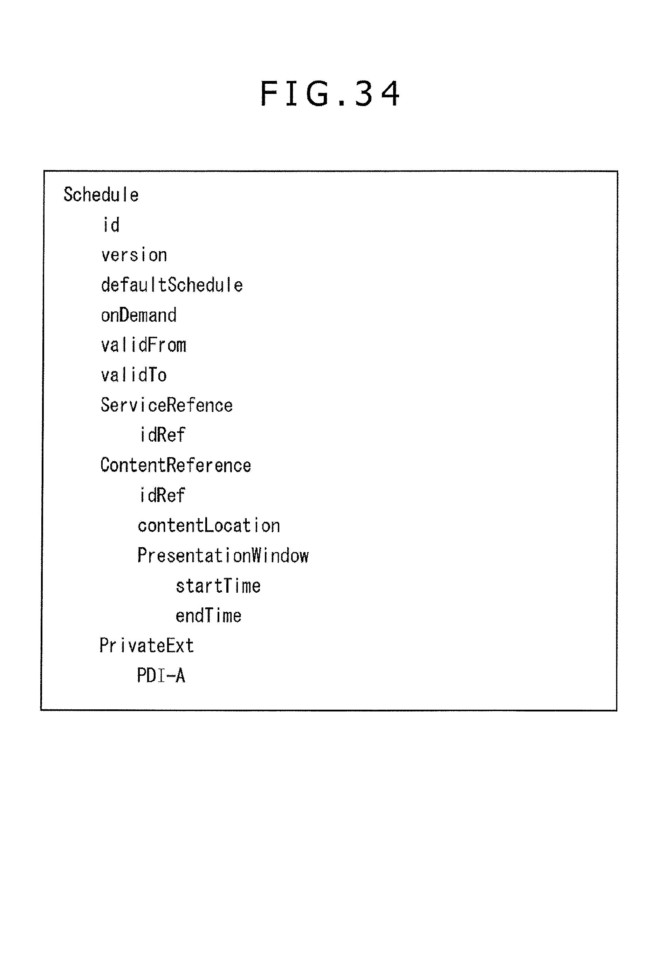

   FIG. 34 is a diagram explaining the configuration of a Schedule fragment.
[FIG. 35]

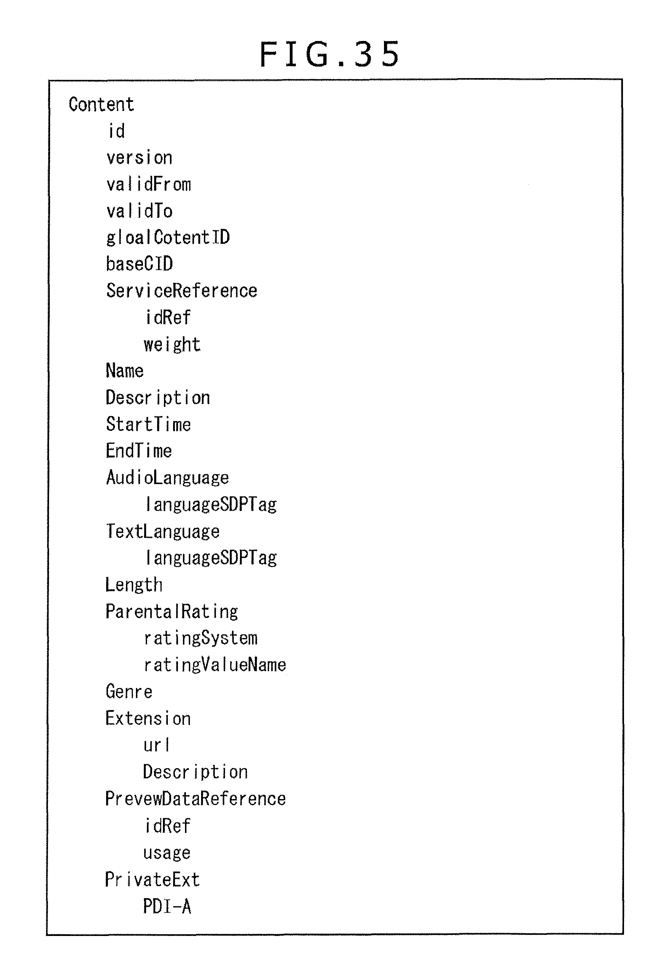

   FIG. 35 is a diagram explaining the configuration of a Content fragment.
[FIG. 36]

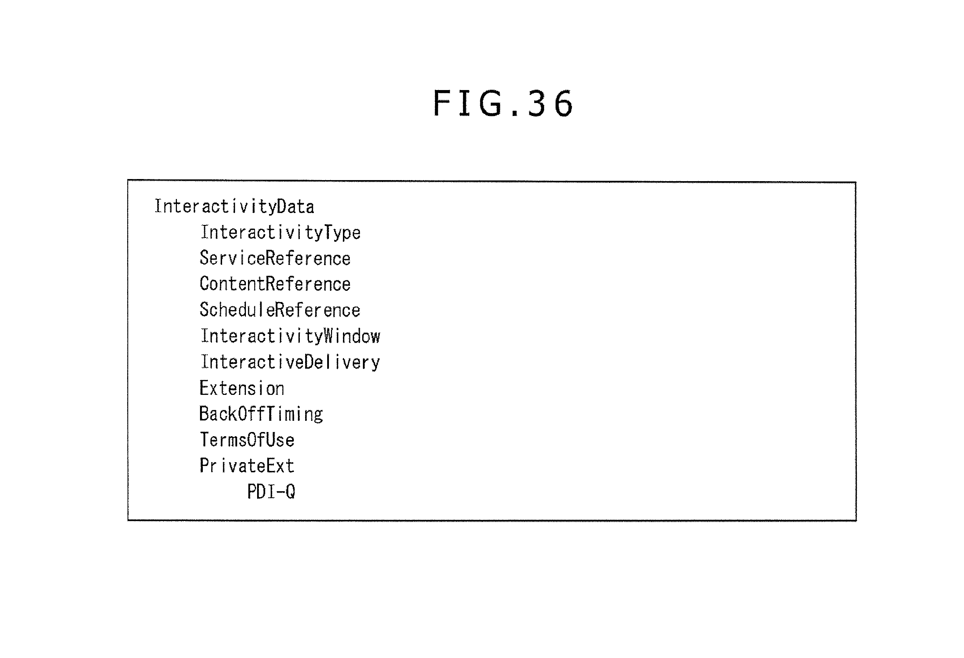

   FIG. 36 is a diagram explaining the configuration of an Interactivity Data fragment.
[FIG. 37]

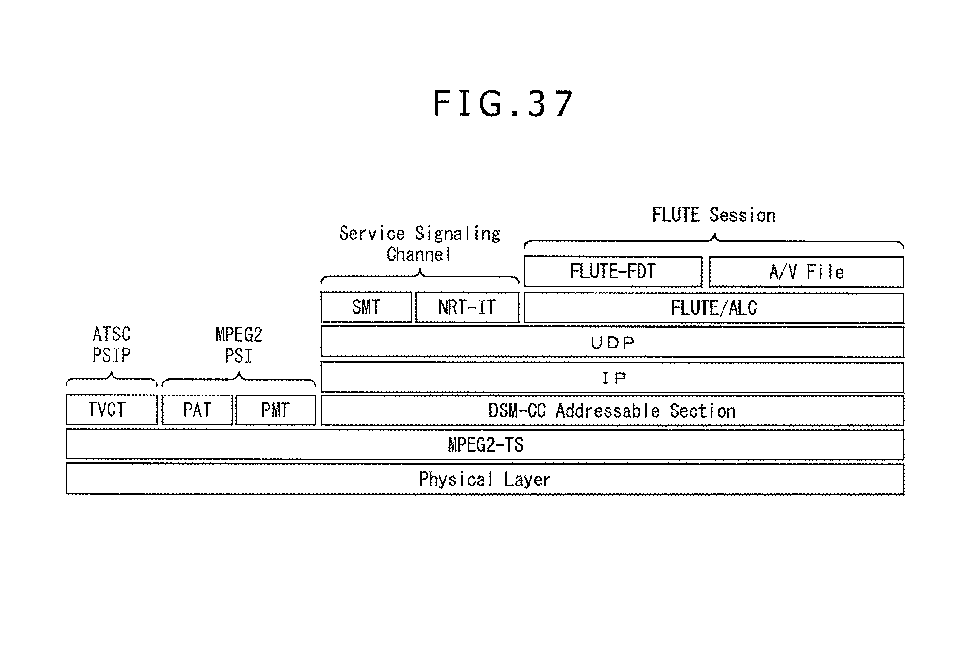

   FIG. 37 is a diagram showing a protocol stack in a signal of a broadcast wave transmitted by NRT broadcasting.
[FIG. 38]

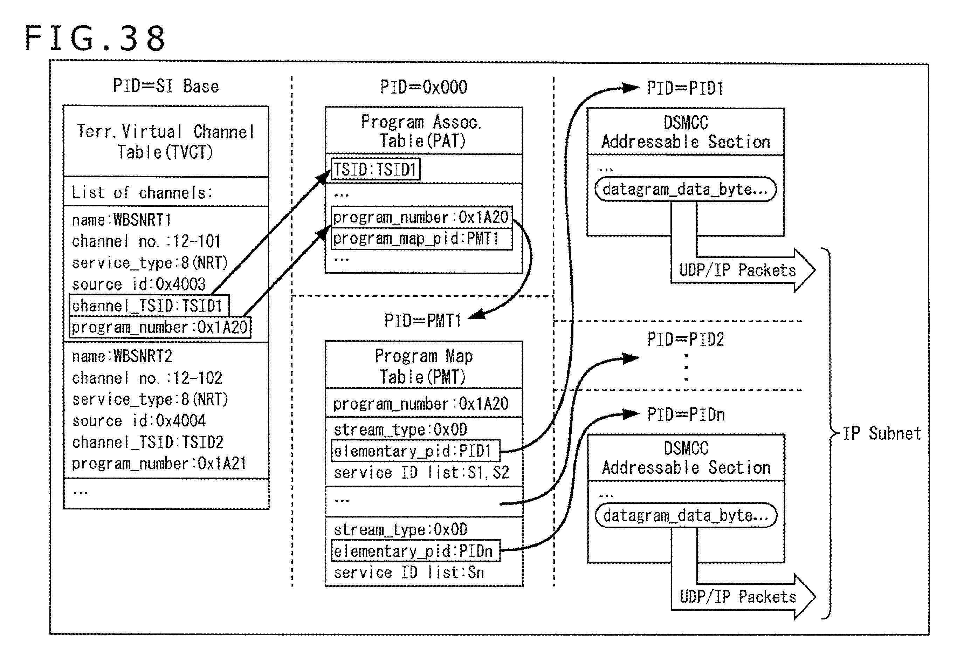

   FIG. 38 is a diagram showing the data structure of TVCT, PAT, PMT, and DSM-CC Addressable Section.
[FIG. 39]

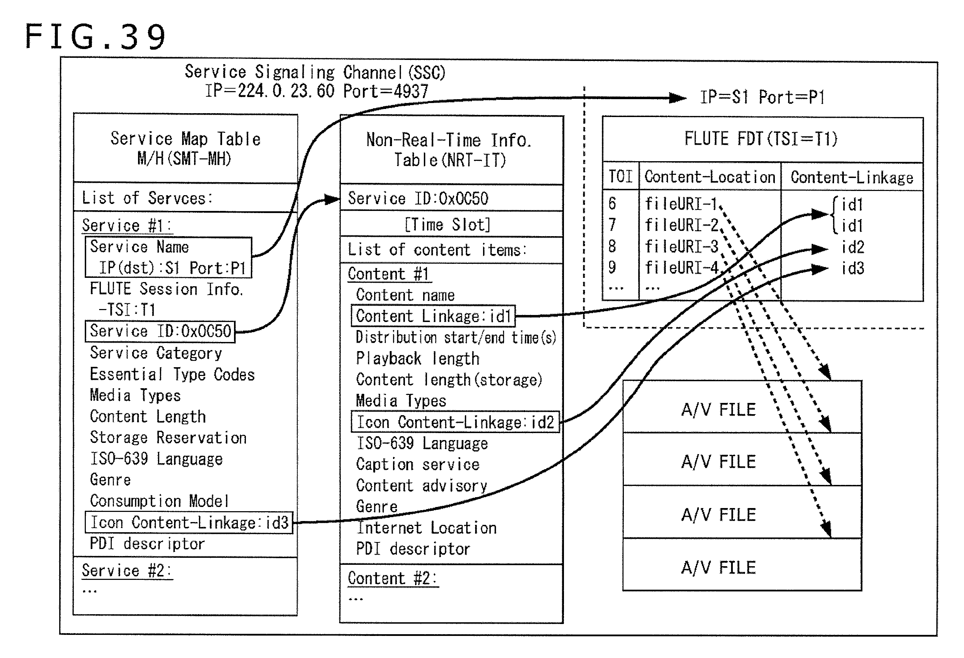

   FIG. 39 is a diagram showing the data structure of SMT, NRT-IT, and FLUTE FDT.
[FIG. 40]

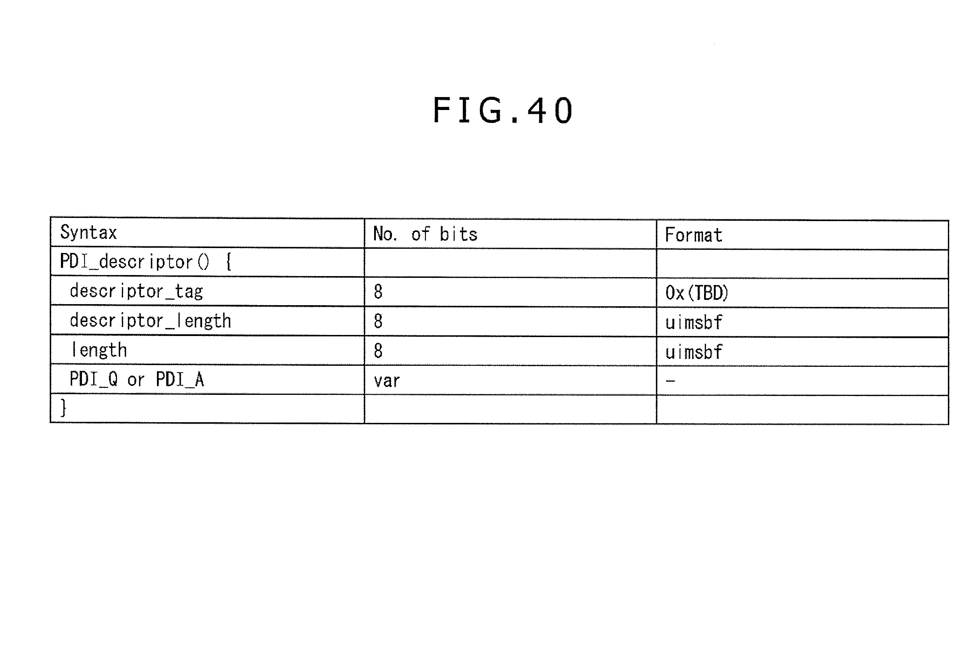

   FIG. 40 is a diagram showing an example of the syntax of a PDI descriptor.

### [Description of Embodiment]

An embodiment of the present technique will be described below with reference to the drawings.

### [Configuration Example of Broadcast System]

FIG. 1 shows a configuration example of a broadcast system according to one embodiment of the present technique.

A broadcast system 10 of FIG. 1 is composed of a server 11 set on the side of a provider such as a broadcasting organization that broadcasts (provides) a digital television program (hereinafter, referred to as content arbitrarily) and a client terminal (hereinafter, referred to simply as client) 12 set in a user's house or the like where broadcast content is viewed. The client 12 is set in each of plural user's houses. However, it is also possible that it is configured as a portable terminal device such as a cell phone and a PDA (Personal Digital Assistant).

In the broadcast system 10, the server 11 sends out, to the client 12, content and content metadata relating to this content as a signal of digital broadcast waves. The client 12 performs filtering of the content based on the content metadata sent out together with the content to thereby reproduce or accumulate only content desired by the user. Instead of being sent out together with the content, the content metadata may be sent out before the content is sent out.

Furthermore, in the broadcast system 10, the server 11 and the client 12 may transmit and receive the content metadata and the content via a network such as the Internet.

### [Hardware Configuration of Server]

FIG. 2 shows the hardware configuration of the server 11. In FIG. 2, the server 11 is configured based on e.g. a computer.

A CPU (Central Processing Unit) 21 executes various kinds of processing in accordance with a program stored in a ROM (Read Only Memory) 22 or a program loaded from a storing section 28 into a RAM (Random Access Memory) 23. Furthermore, in the RAM 23, data and so forth necessary in the execution of various kinds of processing by the CPU 21 are also stored accordingly.

The CPU 21, the ROM 22, and the RAM 23 are connected to each other via a bus 24. Furthermore, an input/output interface 25 is also connected to the bus 24.

To the input/output interface 25, an input section 26 composed of a keyboard, a mouse, and so forth, an output section 27 composed of a display formed of an LCD (Liquid Crystal Display), an organic EL (Electro Luminescence), or the like, a speaker, and so forth, the storing section 28 configured by a hard disk or the like, and a communication section 29 composed of a modem, a terminal adapter, an antenna, and so forth are connected. The communication section 29 communicates with an external device via a network or the like that is not shown in the diagram. Furthermore, a program may be acquired via the communication section 29 and stored in the storing section 28.

Furthermore, a drive 30 is connected to the input/output interface 25 according to need and removable media 31 such as a magnetic disk, an optical disk, a magnetooptical disk, or a semiconductor memory are accordingly mounted. A computer program read out from them is installed in the storing section 28 according to need.

Although diagrammatic representation is omitted, the hardware of the client 12 is also configured as shown in FIG. 2 similarly.

### [Functional Configuration Example of Server]

Next, a functional configuration example of the server 11 will be described with reference to FIG. 3.

The server 11 is composed of a PDI-Q generator 41, a communication section 42, a PDI-A generator 43, a metadata distributor 44, a content accumulator 45, and a content distributor 46.

The PDI-Q generator 41 generates a PDI-Q (Preference Demographic and Interest-Question) that is information representing a question about a preference of the user (viewer) of the client 12 to transmit it to the client 12 via the communication section 42 and supply it to the PDI-A generator 43.

In response to a request from the client 12, the communication section 42 transmits, to the client 12, various kinds of data supplied from the PDI-Q generator 41, the metadata distributor 44, and the content distributor 46.

Based on the PDI-Q from the PDI-Q generator 41, the PDI-A generator 43 generates a PDI-A (Preference Demographic and Interest-Answer) that is information representing an answer set by the provider side to the above-described question about a preference of the user of the client 12 corresponding to the PDI-Q. The PDI-A generator 43 supplies it to the metadata distributor 44.

Based on the PDI-A from the PDI-A generator 43, the metadata distributor 44 identifies (refers to) content corresponding to the answer set by the provider side among pieces of content accumulated in the content accumulator 45. The metadata distributor 44 generates content metadata including the PDI-A as content metadata of the identified content and transmits it to the client 12 via the communication section 42.

The content accumulator 45 accumulates various pieces of content to be distributed to the client 12.

The content distributor 46 acquires the content identified by the metadata distributor 44 among the pieces of content accumulated in the content accumulator 45 and transmits it to the client 12 via the communication section 42.

### [Functional Configuration Example of Client]

Next, a functional configuration example of the client 12 will be described with reference to FIG. 4.

The client 12 is composed of a communication section 51, a PDI-A generator 52, a PDI store 53, a content filter 54, a content reproducer 55, and a content accumulator 56.

The communication section 51 receives various kinds of data transmitted from the server 11 and supplies it to the PDI-A generator 52, the PDI store 53, or the content filter 54.

Based on the PDI-Q transmitted from the server 11, the PDI-A generator 52 generates a PDI-A representing the answer of the user to the question about a preference of the user of the client 12 corresponding to the PDI-Q. The PDI-A generator 52 stores it in the PDI store 53.

The PDI store 53 stores the PDI-A from the PDI-A generator 52 and stores the PDI-Q transmitted from the server 11. The PDI-A stored in the PDI store 53 is read out to the content filter 54 according to need. The PDI store 53 does not need to be provided inside the client 12. It may be provided inside the server 11 or may be provided inside another terminal on a network with which the client 12 can communicate.

The content filter 54 reads out a PDI-A from the PDI store 53 and performs matching between this PDI-A and a PDI-A included in metadata of content transmitted from the server 11 to thereby perform filtering of content distributed from the server 11. The content filter 54 supplies content for which the filtering has been performed to the content reproducer 55 or the content accumulator 56 depending on the result of the filtering.

The content reproducer 55 reproduces the content from the content filter 54. Furthermore, the content reproducer 55 acquires content from the content accumulator 56 and reproduces this content.

The content accumulator 56 accumulates (records) the content from the content filter 54.

### [Example of Syntax of XML Schema]

Here, with reference to FIG. 5, an example of the syntax of an XML (Extensible Markup Language) schema for configuring the PDI-Q and the PDI-A will be described.

In FIG. 5, the first row shows declaration and definition for identification of the PDI-Q and the second row shows declaration of the name and type of the whole questions defined as a PDI-Q. One or more PDI-Q and/or PDI-A representing an answer to a question defined as a PDI-Q are treated as one table (hereinafter, referred to as PDI table).

The third row to 12th row show declaration of the name and type of each of the questions declared on the second row. Specifically, a type "IntegerAnswerType" of the question defined with a name "QIA" on the fifth row shows that this question is a question for an answer of the integer value type, and a type "BooleanAnswerType" of the question defined with a name "QBA" on the sixth row shows that this question is a question for an answer of the logical value type. Furthermore, a type "SelectionAnswerType" of the question defined with a name "QSA" on the seventh row shows that this question is a question for an answer of the answer selection type, and a type "TextAnswerType" of the question defined with a name "QTA" on the eighth row shows that this question is a question for an answer of the character string type. Moreover, a type "AnyAnswerType" of the question defined with a name "QAA" on the ninth row shows that this question is a question that does not limit the type of the answer.

The 13th row to 44th row show declaration of an element of each of the questions defined with the names "QIA," "QBA," "QSA," and "QTA" among the questions declared in the above-described manner. In particular, id elements shown on the 15th row, the 24th row, the 31st row, and the 40th row represent an ID (identifier) for identifying the item of the respective questions and are defined as follows as a first format thereof.
"common:[category:]question-ID"
In this first format, "common" shows that the question identified by this id element is a question defined in common irrespective of the provider. "category" represents the category of the question and "question-ID" represents the identifier of the question. "category" may have a hierarchically nested structure like the following according to need.
"common: [categoryl:category2:category3: ···]question-ID"

Furthermore, the id element is defined as follows as a second format thereof.
"providerName:[category:]question-ID"
In this second format, "providerName" represents the name of the provider that has set the question identified by this id element. "category" and "question-ID" are the same as those in the first format.

In this manner, the question defined as a PDI-Q is distinguished as a question irrespective of the provider that provides content (in common to providers) and a question defined uniquely to the provider that provides content, based on the id element.

In the following, arbitrarily a question irrespective of the provider that provides content and an answer to this question will be referred to as a provider-common filtering parameter and a question defined uniquely to the provider that provides content and an answer to this question will be referred to as a provider-unique filtering parameter.

As described above, the provider-common filtering parameter is defined in common to providers regardless of the individual providers. Thus, generally the vendor (manufacturer or the like) of the client 12 provides it. Therefore, although the PDI-Q generator 41 in the server 11 can be provided by the provider side, it is also possible that it is provided by the vendor of the client 12.

The syntax configuring a PDI table including PDI-Q and/or PDI-A is not limited to the example shown in FIG. 5 and may be one in accordance with an XML schema like that shown in FIG. 6 for example.

### [Example of PDI-Q]

Next, an example of the PDI table including the PDI-Q configured based on the syntax of FIG. 5 will be described with reference to FIG. 7.

In FIG. 7, "transactional" on the first row is a value showing whether or not recording/update processing is made null (so-called rolled backed) retroactive to the state immediately before the recording/update of the contents of the respective items of the PDI-Q if all contents of the respective items of the PDI-Q are not recorded/updated attributed to any accident (disk writing error, interruption of processing due to increase in the processing burden, etc.) in the middle of the processing of recording/updating the contents of the respective items of the PDI-Q in a memory area (not shown) of the client 12 when the PDI table including the question (question group) defined by the PDI-Q is updated by the client 12 of the transmission destination. If "transactional" is "true," the PDI-Q is rolled back.

The second row to fifth row define a question for an answer of the logical value type. <id>Common:111</id> on the third row represents the id element of the question and <q>Are you currently employed?</q> on the fourth row represents the question itself.

The sixth row to ninth row define a question for an answer of the integer value type. <id>Common:222</id> on the seventh row represents the id element of this question and <q>What is the age of the oldest member of the household who watches television?</q> on the eighth row represents this question itself. minInclusive = "10" maxInclusive = "100" on the sixth row shows that the answer to this question is limited to an integer value of 10 to 100 inclusive.

The 10th row to 17th row define a question for an answer of the answer selection type. <id>ProviderA:123</id> on the 11th row represents the id element of this question and <q>In which of the following sports are you most interested? (Multiple selection allowed)</q> on the 12th row represents this question itself. <a>Baseball</a> on the 13th row, <a>Basketball</a> on the 14th row, <a>Soccer</a> on the 15th row, and <a>Hockey</a> on the 16th row each represent a choice of the answer to the question. minChoice = "1" maxChoice = "3" on the 10th row shows that the number of answers to this question is limited to one to three out of the choices.

The 18th row to 24th row define a question for an answer of the answer selection type.
<id>ProviderA:ProgramX:123</id> on the 19th row represents the id element of this question and <q>Do you enjoy camping and outdoor recreation? (Only one selection)</q> on the 20th row represents this question itself. <a>Never</a> on the 21st row, <a>Occasionally</a> on the 22nd row, and <a>Frequently</a> on the 23rd row each represent a choice of the answer to the question. maxChoice = "1" on the 18th row shows that the number of answers to this question is limited to one.

As above, in the PDI-Q, candidates for the answer to a question and limitation conditions on the answer are also defined depending on the type of the question.

The 25th row to 28th row define a question for an answer of the character string type. <id>ProviderA:321</id> on the 26th row represents the id element of this question and <q>Who's products are you most interested in recently?</q> on the 27th row represents this question itself.

Here, in the following, each of the questions defined by the PDI-Q of FIG. 7 will be referred to as the question of a respective one of the id elements. Specifically, the question defined on the second row to fifth row will be referred to as the question of "Commom:111," and the question defined on the sixth row to ninth row will be referred to as the question of "Commom:222." The question defined on the 10th row to 17th row will be referred to as the question of "ProviderA:123" and the question defined on the 18th row to 24th row will be referred to as the question of "ProviderA:ProgramX:123." The question defined on the 25th row to 28th row will be referred to as the question of "ProviderA:321."

At this time, the question of "Commom:111" and the question of "Commom:222" are distinguished as the provider-common filtering parameter. The question of "ProviderA:123," the question of "ProviderA:ProgramX:123," and the question of "ProviderA:321" are distinguished as the provider-unique filtering parameter. For example, the question of "Commom:111" shows that this question is a question set in common to providers with "111" as the identifier. The question of "ProviderA:ProgramX:123" shows that this question is a question set by a provider as "ProviderA" with "ProgramX" as the category (program ID) and "123" as the identifier.

### [Screen Display Example in Dialogue with User by PDI-A Generator]

Next, a screen display example in a dialogue with the user of the client 12 will be described with reference to FIGS. 8 to 12. Here, suppose that the client 12 receives a PDI-Q included in a PDI table described with reference to FIG. 7 and screens corresponding to a question group defined by the PDI-Q included in the received PDI table are sequentially displayed on a display section (not shown) of the client 12.

FIG. 8 shows a screen display example corresponding to the question of "Common:111" among the questions defined by the PDI-Q explained with reference to FIG. 7. In FIG. 8, a question "Are you currently employed?" shown on the fourth row of FIG. 7 is displayed in a question presentation part 61. Furthermore, a message "Please Select Either." prompting the user to input the answer to the question, a selection button 62-1 for allowing the user to select "Yes" as the answer to the question, and a selection button 62-2 for allowing the user to select "No" as the answer to the question are displayed.

FIG. 9 shows a screen display example corresponding to the question of "Common:222" among the questions defined by the PDI-Q explained with reference to FIG. 7. In FIG. 9, a question "What is the age of the oldest member of the household who watches television?" shown on the eighth row of FIG. 7 is displayed in a question presentation part 71. Furthermore, a message "Please Enter Age." prompting the user to enter the answer to the question and an answer entry part 72 for allowing the user to enter an integer value as the answer to the question are displayed.

FIG. 10 shows a screen display example corresponding to the question of "ProviderA:123" among the questions defined by the PDI-Q explained with reference to FIG. 7. In FIG. 10, a question "In which of the following sports are you most interested? (Multiple selection allowed)" shown on the 12th row of FIG. 7 is displayed in a question presentation part 81. Furthermore, a message "Please Select One to Three Choices from the Following." prompting the user to input the answer to the question and selection buttons 82-1 to 82-4 for allowing the user to select choices "Baseball," "Basketball," "Soccer," and "Hockey" as the answer to the question are displayed.

FIG. 11 shows a screen display example corresponding to the question of "ProviderA:ProgramX:123" among the questions defined by the PDI-Q explained with reference to FIG. 7. In FIG. 11, a question "Do you enjoy camping and outdoor recreation? (Only one selection)" shown on the 20th row of FIG. 7 is displayed in a question presentation part 91. Furthermore, a message "Please Select Only One from the Following." prompting the user to input the answer to the question and selection buttons 92-1 to 92-3 for allowing the user to select choices "Never," "Occasionally," and "Frequently" as the answer to the question are displayed.

FIG. 12 shows a screen display example corresponding to the question of "ProviderA:321" among the questions defined by the PDI-Q explained with reference to FIG. 7. In FIG. 12, a question "Who's products are you most interested in recently?" shown on the 27th row of FIG. 7 is displayed in a question presentation part 101. Furthermore, a message "Please Describe Freely." prompting the user to enter the answer to the question and an answer entry part 102 for allowing the user to enter a character string as the answer to the question are displayed.

In this manner, the PDI-A generator 52 makes the user enter or select the answer to the question defined by the PDI-Q by the screen display explained with FIGS. 8 to 12 to thereby generate the PDI-A corresponding to the PDI-Q.

The screen display explained with FIGS. 8 to 12 may be displayed soon after the PDI-Q is received. Alternatively, the PDI-Q may be retained in a memory part that is not shown in the diagram after the PDI-Q is received and the screen display may be displayed e.g. when display of a setting screen is ordered by the user.

### [Example of PDI-A]

Next, an example of the PDI table including a PDI-A generated by the client 12 will be described with reference to FIG. 13. A PDI-A included in a PDI table shown in FIG. 13 is a PDI-A generated based on selection or entry of answers by the user to the screen display shown in FIGS. 8 to 12.

Specifically, the second row to fifth row show the answer by the user to the question presented by the screen display explained with FIG. 8. Specifically, <id>Common:111</id> on the third row shows the id element of the question presented by the screen display of FIG. 8, and <a>true</a> on the fourth row shows that the selection button 62-1 (answer of "Yes") is selected by the user in the screen display of FIG. 8 as the answer to the question.

The sixth row to ninth row show the answer by the user to the question presented by the screen display explained with FIG. 9. Specifically, <id>Common:222</id> on the seventh row shows the id element of the question presented by the screen display of FIG. 9, and <a>34</a> on the eighth row shows that "34" as an integer value is entered into the answer entry part 72 by the user in the screen display of FIG. 9 as the answer to the question.

The 10th row to 15th row show the answer by the user to the question presented by the screen display explained with FIG. 10. Specifically, <id>ProviderA:123</id> on the 11th row shows the id element of the question presented by the screen display of FIG. 10. <a>Baseball</a> on the 12th row, <a>Soccer</a> on the 13th row, and <a>Hockey</a> on the 14th row show that the selection buttons 82-1, 82-3, and 82-4 are selected by the user in the screen display of FIG. 10 as the answer to the question.

The 16th row to 19th row show the answer by the user to the question presented by the screen display explained with FIG. 11. Specifically,
<id>ProviderA:ProgramX:123</id> on the 17th row shows the id element of the question presented by the screen display of FIG. 11, and <a>Occasionally</a> on the 18th row shows that the selection button 92-2 is selected by the user in the screen display of FIG. 11 as the answer to the question.

The 20th row to 23rd row show the answer by the user to the question presented by the screen display explained with FIG. 12. Specifically, <id>ProviderA:321</id> on the 21st row shows the id element of the question presented by the screen display of FIG. 12, and <a>Somy</a> on the 22nd row shows that "Somy" as a character string is entered into the answer entry part 102 by the user in the screen display of FIG. 12 as the answer to the question.

Only the PDI-A generated based on selection or entry of the answer by the user is included in the PDI table shown in FIG. 13. However, together with the PDI-A, the PDI-Q corresponding to this PDI-A may be included.

For the PDI-A generated in the client 12 in this manner, matching with a PDI-A included in content metadata from the server 11 is performed. Based on the result thereof, content from the server 11 is acquired. In the following, in order to distinguish the PDI-A stored in the PDI store 53 and the PDI-A included in content metadata from the server 11, the former will be referred to as user-side PDI-A and the latter will be referred to as provider-side PDI-A.

### [Example of Matching Processing in Content Filter]

Here, suppose that the PDI-A explained with reference to FIG. 13 is generated and stored as a user-side PDI-A and a PDI-A shown in FIG. 14 is transmitted from the server 11 as a provider-side PDI-A.

The basic configuration of the provider-side PDI-A shown in FIG. 14 is the same as the user-side PDI-A shown in FIG. 13 and therefore detailed description is omitted. This provider-side PDI-A shows that "false" is selected as the answer to the question of "Common:111," "Baseball" is selected as the answer to the question of "ProviderA:123," and "Never" is selected as the answer to the question of "ProviderA:ProgramX:123."

At this time, the content filter 54 compares the user-side PDI-A with the provider-side PDI-A. If at least one answer to the question is identical, the content filter 54 determines that the user-side PDI-A matches the provider-side PDI-A. If no answer to the question is identical, the content filter 54 determines that the user-side PDI-A does not match the provider-side PDI-A. In this case, the answer is identical in that "Baseball" is included in each of the answer to the question of "ProviderA:123" in the user-side PDI-A shown in FIG. 13 and the answer to the question of "ProviderA:123" in the provider-side PDI-A shown in FIG. 14. Thus, it is determined that the user-side PDI-A matches the provider-side PDI-A.

Next, suppose that a PDI-A shown in FIG. 15 is transmitted from the server 11 as a provider-side PDI-A.

The provider-side PDI-A shown in FIG. 15 shows that "Basketball" is selected as the answer to the question of "ProviderA:123" and "Never" is selected as the answer to the question of "ProviderA:ProgramX:123."

In this case, no answer is identical between the answers to the questions in the user-side PDI-A shown in FIG. 13 and the answers to the questions in the provider-side PDI-A shown in FIG. 15. Thus, it is determined that the user-side PDI-A does not match the provider-side PDI-A.

### [Functions of PDI API]

Incidentally, the PDI table including a PDI-Q transmitted from the server 11 and a user-side PDI-A generated in the client 12 is accumulated in the PDI store 53. Then, by an application executed by the client 12, readout and update of the PDI table accumulated in the PDI store 53 or the PDI-Q and the user-side PDI-A included in this PDI table are performed.

Specifically, as shown in FIG. 16, a PDI application 111 executed by e.g. a Web browser on the client 12 calls a PDI API 112 composed of plural APIs (Application Programming Interface) to thereby access a PDI table 121-1 and a PDI table 121-2 accumulated in the PDI store 53.

A uniquely assigned ID (hereinafter, referred to as PDI table ID) and a version are given to each of the PDI table 121-1 and the PDI table 121-2, and the PDI application 111 accesses the PDI table 121-1 and the PDI table 121-2 based on the PDI table ID and the version.

Furthermore, plural PDI-Qs and user-side PDI-As are included in the PDI table 121-1 and the PDI table 121-2. Here, if the PDI-Q and the user-side PDI-A will be referred to as PDI instance collectively, the PDI application 111 calls the PDI API 112 to thereby access PDI instances 131-1, 131-2, and 132-1 included in the PDI table 121-1 and PDI instances 131-3, 132-2, and 132-3 included in the PDI table 121-2.

An ID common to providers (hereinafter, referred to as PDIID) is given to the PDI instances 131-1 to 131-3 and a PDIID unique to the provider is given to the PDI instances 132-1 to 132-3. The PDIIDs of the PDI instances are each uniquely assigned and the PDI application 111 accesses the PDI instances 131-1 to 131-3 and the PDI instances 132-1 to 132-3 based on this PDIID.

In this manner, the client 12 performs access to the PDI store 53 by calling the PDI API 112. This PDI store 53 may be a file system or a database executed by an application native in the client 12 or may be a database provided by a remote service utilizing a network. Furthermore, the PDI store 53 is so made as to exist in association with only one client 12. In the PDI store 53, update and removal of the PDI table are performed also by the application native in the client 12, and these kinds of processing are executed as a process of the background even when the Web browser is not the active state.

Furthermore, the PDI API 112 provides an interface for executing query processing to the PDI store 53. This query processing may be executed only on the client 12 or may be executed by performing communication with the server 11.

The APIs included in the PDI API 112 will be specifically described below.

### [getPDITable()]

FIG. 17 is a diagram explaining getPDITable() as one of the APIs included in the PDI API 112.

getPDITable() treats the PDI table ID (pdiTableId) of the PDI table as the input argument and returns the PDI table identified by this pdiTableId as a document. If the PDI table identified by this pdiTableId does not exist, null is returned. The PDI table is identified by one PDI table ID and its version is always made the latest one. That is, there is no case in which plural PDI tables having the same PDI table ID and different versions exist.

### [setPDITable()]

FIG. 18 is a diagram explaining setPDITable() as one of the APIs included in the PDI API 112.

setPDITable() treats the PDI table itself as the input argument and first checks whether or not this PDI table exists in the PDI store 53. If this PDI table does not exist in the PDI store 53, the PDI table as the input argument is newly added (generated) to the PDI store 53. If this PDI table exists in the PDI store 53, the PDI table already existing in the PDI store 53 is updated by the PDI table as the input argument and its version is also updated.

If the PDI table as the input argument is neither added nor updated, for example if the capacity of the PDI store 53 exceeds the upper limit, setPDITable() returns an exception error QUOTA_EXCEEDED_ERR. Furthermore, for example if the PDI table is wrong (for example if the version of the input PDI table is older than the version of the PDI table already existing in the PDI store 53), setPDITable() returns an exception error WRONG_DOCUMENT_ERR. If all contents of the PDI table are not added/updated, setPDITable() makes this addition/update processing null retroactive to the state immediately before the addition/update of the contents of the PDI table.

### [removePDITable()]

FIG. 19 is a diagram explaining removePDITable() as one of the APIs included in the PDI API 112.

removePDITable() treats the PDI table ID (pdiTableId) of the PDI table as the input argument. If the PDI table identified by this pdiTableId exists in the PDI store 53, removePDITable() removes this PDI table. If the PDI table does not exist in the PDI store 53, removePDITable() does nothing.

If all contents of the PDI table are not removed, removePDITable() makes this removal processing null retroactive to the state immediately before the removal of the contents of the PDI table.

### [getPDITableID()]

FIG. 20 is a diagram explaining getPDITableID() as one of the APIs included in the PDI API 112.

getPDITableID() returns the PDI table IDs of all PDI tables in the PDI store 53 and returns null if the PDI table does not exist in the PDI store 53.

### [getPDI()]

FIG. 21 is a diagram explaining getPDI() as one of the APIs included in the PDI API 112.

getPDI() treats the PDIID (pdiId) of the PDI instance as the input argument and returns the PDI instance identified by this pdiId as a document. If the PDI instance identified by this pdiId does not exist, null is returned. Only one PDI instance can be accumulated in the PDI store 53 and plural PDI tables can share the PDI instance having the same PDIID.

### [setPDI()]

FIG. 22 is a diagram explaining setPDI() as one of the APIs included in the PDI API 112.

setPDI() treats the PDI instance itself as the input argument and first checks whether or not this PDI instance exists in the PDI store 53. If this PDI instance does not exist in the PDI store 53, setPDI() does nothing. If this PDI instance exists in the PDI store 53, the PDI instance already existing in the PDI store 53 is updated by the PDI instance as the input argument.

At this time, only a PDI-A is updated as the PDI instance and the version of the PDI table including this PDI instance is not updated. For example, if the PDI instance to be updated is shared by plural PDI tables, the contents of each of the PDI tables are updated without update of the version of each of the PDI tables.

For example, if the capacity of the PDI store 53 exceeds the upper limit, setPDI() returns an exception error QUOTA_EXCEEDED_ERR. Furthermore, if the PDI instance is wrong, setPDI() returns an exception error WRONG_DOCUMENT_ERR. If all contents of the PDI instance are not updated, setPDI() makes this update processing null retroactive to the state immediately before the update of the contents of the PDI instance.

setPDI() updates only the PDI instance acquired by getPDI().

[getPDIID()]
FIG. 23 is a diagram explaining getPDIID() as one of the APIs included in the PDI API 112.

getPDIID() returns PDIID of all PDI instances in the PDI store 53. If the PDI instance does not exist in the PDI store 53, it returns null.

[clear()]
FIG. 24 is a diagram explaining clear() as one of the APIs included in the PDI API 112.

clear() makes the PDI store 53 empty if data exists in the PDI store 53, and does nothing if data does not exist in the PDI store 53.

The API explained with reference to FIGS. 17 to 24 does not need to wait for the processing until physical writing to the disk is ended and may write data to the disk after temporarily writing the data in a cache area or the like. Furthermore, simultaneous access to the same data in the PDI store 53 from plural scripts (applications) is not permitted.

[queryPDI()]
FIG. 25 is a diagram explaining queryPDI() as one of the APIs included in the PDI API 112.

queryPDI() treats a character string representing a query (XPathOrXQuery) as the input argument and makes a query to the PDI store 53 by using a query language such as XPath or XQuery. The input argument XPathOrXQuery is described by XPath or Xquery and queryPDI() returns an exception error SYNTAX_ERR if a wrong character string is included in XPathOrXQuery.

If the API like the above ones is defined by using the Web IDL (Interface Definition Language) in the JavaScript (registered trademark) for example, it is defined as shown in FIG. 26.

Furthermore, if the API method like the above ones is added to a Window object in the JavaScript (registered trademark), it is defined as shown in FIG. 27.

As shown in FIG. 27, if the above-described API is added to a Window object, when access to an attribute window.pdiStore is made, the browser (Web application) returns an object of the PDI store corresponding to the client 12 on the client 12. The object of the PDI store is not accessed by plural sessions. Therefore, if a session between the PDI store and another browser has been established, the browser returns an exception error when access to this PDI store is attempted.

In the above manner, by the PDI API 112, the PDI table and the PDI instance such as the PDI-Q and the user-side PDI-A are read out from the PDI store 53 and updated according to need. Therefore, the user can check PDI tables and PDI instances at the time and make them the latest ones. Accordingly, the user comes to be able to surely acquire content according to needs at the time.

[Example of Transmission/Reception Processing of Content] Next, transmission/reception processing of content in the broadcast system 10 will be described with reference to a flowchart of FIG. 28. In the transmission/reception processing of content in the broadcast system 10, content is distributed by execution of content distribution processing by the server 11 and content is acquired by execution of content acquisition processing by the client 12.

On the provider side such as a broadcasting organization, if e.g. the sponsor of content to be broadcast (distributed) or the broadcasting organization itself requests to distribute content for viewers having specific preference and attribute, in a step S11, the PDI-Q generator 41 of the server 11 generates a PDI-Q for inquiring of the viewers, i.e. the user of the client 12, what preference and attribute the user has according to operation by a staff on the provider side.

In a step S12, the PDI-Q generator 41 of the server 11 transmits a PDI table including the generated PDI-Q to the client 12 via the communication section 42 and supplies it to the PDI-A generator 43.

In a step S21, the communication section 51 of the client 12 receives the PDI table transmitted from the server 11 and supplies it to the PDI-A generator 52. Here, suppose that, in the client 12, a Web application (script) executed by a browser, e.g. the PDI application 111 (FIG. 16), executes reception processing of the PDI table.

The PDI table is received by the client 12 every time it is broadcast (transmitted) from a broadcast station as the provider in which the server 11 is set at a predetermined time interval for example. Alternatively, the PDI table may be received by the client 12 when the channel is tuned to the broadcast station in which the server 11 is set in the client 12.

In a step S22, the PDI-A generator 52 of the client 12 generates a user-side PDI-A to the question defined by the PDI-Q included in the PDI table received in the communication section 51. Specifically, when the PDI-Q from the server 11 is received, the PDI-A generator 52 makes a screen corresponding to the question defined by the PDI-Q be displayed on a display section that is not shown in the diagram and makes the user (viewer) of the client 12 enter or select an answer to this question to thereby generate the PDI-A representing this answer. That is, the PDI-A generator 52 has a dialogue with the user to thereby generate the user-side PDI-A representing the answer to the question defined by the PDI-Q.

Here, the PDI-A generator 52 is realized by the Web application and the Web application generates the user-side PDI-A.

Then, in a step S23, the PDI-A generator 52 stores the generated user-side PDI-A in the PDI store 53. Specifically, the Web application calls setPDITable() to store the user-side PDI-A in the PDI store 53.

Meanwhile, in a step S13, the PDI-A generator 43 of the server 11 generates a provider-side PDI-A to the question defined by the PDI-Q included in the PDI table from the PDI-Q generator 41 and supplies it to the metadata distributor 44. Specifically, when the PDI-Q is generated by operation of a staff of the broadcast station (provider side), the PDI-A generator 43 makes a screen corresponding to the question defined by the PDI-Q like that explained with reference to FIGS. 8 to 12 for example be displayed on a display section that is not shown in the diagram and makes the staff of the broadcast station enter or select an answer to this question to thereby generate the provider-side PDI-A representing this answer. At this time, the staff of the broadcast station enters or selects an answer corresponding to the content to be distributed as the answer to the question defined by the PDI-Q. Specifically, the provider-side PDI-A generated by the PDI-A generator 43 is so generated that the provider side takes into consideration the preference of the user (viewer) of the client 12, and represents information (answer) for causing this viewer to view the content to be distributed later.

In a step S14, the metadata distributor 44 identifies (refers to) content corresponding to the provider-side PDI-A among pieces of content accumulated in the content accumulator 45 based on the provider-side PDI-A from the PDI-A generator 43. The content identified here may be such one that the similarly between the provider-side PDI-A from the PDI-A generator 43 and the content metadata, which is given to the accumulated content in advance, is higher than a predetermined value, or may be one selected in advance by the staff of the broadcast station as content desired to be viewed by the user. The content identified by the metadata distributor 44 is acquired from the content accumulator 45 by the content distributor 46.

In a step S15, the metadata distributor 44 newly generates content metadata including the provider-side PDI-A based on the content metadata given to the content identified in the step S14 in advance and the PDI-A from the PDI-A generator 43.

In a step S16, in response to a request from the client 12, the communication section 42 distributes the content acquired by the content distributor 46 together with the content metadata generated by the metadata distributor 44. At this time, as the content metadata, content metadata defined by a standards organization may be transmitted besides the content metadata generated by the metadata distributor 44.

In this manner, content including, in the content metadata, the provider-side PDI-A representing the answer intended by the provider side as the answer to the question defined by the PDI-Q, in other words, content matching the preference of the user expected to view it by the provider side, is distributed.

The processing of the steps S13 to S16 does not need to be executed immediately after the processing of the step S12 continuously and only has to be executed until the user-side PDI-A is generated and stored in the clients 12 possessed by the respective users.

Although it is explained that content is distributed together with content metadata in the step S16, the content does not need to be distributed together with the content metadata. After the content metadata including the provider-side PDI-A is transmitted to the client 12 in advance, the content corresponding to this content metadata may be distributed.

Now when the content and the content metadata are distributed from the server 11 in this manner, in a step S24, the receiving section 51 of the client 12 receives the content and the content metadata distributed from the server 11 and supplies them to the content filter 54. The processing of the step S24 and the subsequent steps is executed not by the Web application executed on the browser but by an application that is native in the client 12.

In a step S25, the content filter 54 reads out the user-side PDI-A from the PDI store 53.

In a step S26, the content filter 54 performs matching between the user-side PDI-A read out from the PDI store 53 and the provider-side PDI-A included in the content metadata from the server 11.

In a step S27, the content filter 54 determines whether or not the user-side PDI-A matches the provider-side PDI-A. If it is determined in the step S27 that the user-side PDI-A matches the provider-side PDI-A, the content filter 54 determines that the content distributed from the server 11 is content matching the preference of the user (viewer) of the client 12 and supplies this content to the content reproducer 55 or the content accumulator 56, so that the processing proceeds to a step S28.

Specifically, if the content distributed from the server 11 is supplied from the content filter 54 to the content reproducer 55, the content reproducer 55 reproduces the content in the step S28. Furthermore, if the content distributed from the server 11 is supplied from the content filter 54 to the content accumulator 56, the content accumulator 56 accumulates (records) the content in the step S28. The accumulated content is supplied to the content reproducer 55 and reproduced accordingly in response to an operation instruction of the user.

On the other hand, if it is determined in the step S27 that the user-side PDI-A does not match the provider-side PDI-A, the content filter 54 determines that the content distributed from the server 11 is not content matching the preference of the user (viewer) of the client 12 and discards (removes) this content, so that the processing ends.

According to the above processing, in the broadcast system, on the provider side, a PDI-Q representing a question about the preference of the user is generated by the server and this PDI-Q is transmitted to the client terminal. For this PDI-Q, a provider-side PDI-A representing an answer set by the provider side is distributed as the content metadata of the corresponding content. This makes it possible that, as the content metadata, content metadata according to needs at the time other than content metadata defined by a standards organization is given to the content. Meanwhile, on the user side, a user-side PDI-A representing the answer by the user to the PDI-Q from the server is generated by the client terminal and matching between the generated user-side PDI-A and the provider-side PDI-A from the server is performed. Therefore, whether or not to acquire content distributed from the server is decided. This makes it possible to perform filtering of the content by content metadata according to the needs at the time other than content metadata defined by a standards organization. Therefore, content according to the needs at the time can be acquired.

In the above, the client 12 performs the matching of the PDI-A in real time at the time of distribution of content from the server 11. However, the following way may be employed. Specifically, all pieces of content are accumulated from the server 11 in advance and the matching of the PDI-A is performed in the background of processing. Among the accumulated pieces of content, content corresponding to the matching PDI-A (provider-side PDI-A) is reproduced and content corresponding to the non-matching PDI-A is removed.

Furthermore, in the above, the Web application executes the processing from the reception of the PDI table to the storage of the user-side PDI-A in the PDI store. However, the application that is native in the client 12 may receive the PDI table.

### [Another Example of Transmission/Reception Processing of Content]

Here, the transmission/reception processing of content in the case in which the native application receives the PDI table will be described with reference to a flowchart of FIG. 29.

Processing of steps S31 to S36 and S45 to S49 in the flowchart of FIG. 29 are basically the same as the processing of the steps S11 to S16 and S24 to S28 in the flowchart of FIG. 28 and therefore description thereof is omitted.

Specifically, in a step S41, the communication section 51 of the client 12 receives a PDI table transmitted from the server 11 and supplies it to the PDI-A generator 52. Here, the application that is native in the client 12 executes reception processing of the PDI table.

In a step S42, the communication section 51 stores the received PDI table in the PDI store 53.

In a step S43, the PDI-A generator 52 reads out a PDI-Q from the PDI store 53. Here, the PDI-A generator 52 is realized by the Web application. Specifically, the Web application calls getPDI() to read out the PDI-Q from the PDI table stored in the PDI store 53.

In a step S44, the PDI-A generator 52 generates a user-side PDI-A to the question defined by the read-out PDI-Q.

Then, in a step S45, the PDI-A generator 52 stores the generated user-side PDI-A in the PDI store 53. Specifically, the Web application calls setPDI() to store the user-side PDI-A in the PDI store 53.

In this manner, even when the application that is native in the client 12 receives the PDI table, matching between the user-side PDI-A and the provider-side PDI-A is performed and whether or not to acquire content distributed from the server is decided. As a result, it becomes possible to perform filtering of the content by content metadata according to needs at the time other than content metadata defined by a standards organization. Thus, content according to the needs at the time can be acquired.

Furthermore, in the above, the content filter 54 compares the user-side PDI-A and the provider-side PDI-A represented as instances and performs matching between the user-side PDI-A and the provider-side PDI-A based on whether or not at least one answer to the question is identical. However, the user-side PDI-A and the provider-side PDI-A may be compared by representing either one of the user-side PDI-A or the provider-side PDI-A as a query to evaluate the PDI-A.

Incidentally, the present technique can be applied to a broadcast system that broadcasts a digital television program. As one example thereof, it can be applied to a broadcast system that carries out broadcasting by the ATSC-M/H (Mobile/Handheld) system as an extension of the ATSC (Advanced Television Standard Committee) system to mobile reception.

### [Application Example to Broadcast System Carrying out Broadcasting by ATSC-M/H System]

FIG. 30 is a diagram showing a configuration example of a broadcast system to which the present technique is applied and that broadcasts a digital television program by each of conventional ATSC system and ATSC-M/H system.

The broadcast system of FIG. 30 corresponds to the server 11 in the broadcast system 10 of FIG. 1 and includes an ATSC Legacy System 151, an ATSC M/H System 152, an M/H Framing 153, and an RF/Transmission System 154.

The ATSC Legacy System 151 is the conventional ATSC system and sends out a broadcast stream by the MPEG2-TS (Moving Picture Experts Group 2 Transport Stream). The ATSC M/H System 152 sends out a broadcast stream of an IP packet by the ATSC-M/H system. Control Data 152a in the ATSC M/H System 152 is control information relating to a broadcast stream (A/V (Audio/Video) content) sent out from the ATSC M/H System 152.

Furthermore, each of the above-described broadcast streams is multiplexed by the M/H Framing 153 and is transmitted as a broadcast wave by the RF/Transmission System 154. Details of the functions of the respective blocks are described in the standards of the ATSC and therefore description thereof is omitted here.

FIG. 31 shows the protocol stack in the signal of the broadcast wave transmitted by the ATSC-M/H system.

Although detailed description is omitted, "Service Guide" is set as one of the highest hierarchical layers and defines metadata of content provided by the ATSC-M/H. The Control Data 152a shown in FIG. 30 is transmitted as the content metadata defined by "Service Guide" (hereinafter, referred to simply as Service Guide). That is, in the broadcast system of FIG. 30, the PDI-A (provider-side PDI-A) and the PDI-Q transmitted from the server 11 to the client 12 in the above-described broadcast system 10 are so transmitted as to be stored in Service Guide.

In FIG. 31, "FLUTE" as the lower hierarchical layer adjacent to "Service Guide" and "ALC" as the lower hierarchical layer adjacent to "FLUTE" are hierarchical layers for transferring Service Guide packetized by the UDP/IP (User Datagram Protocol/Internet Protocol).

As the specification of this Service Guide, a data configuration shown in FIG. 32 is defined by the OMA (Open Mobile Alliance). Details of the configuration of Service Guide shown in FIG. 32 are defined in "'Service Guide for Mobile Broadcast Services,' Open Mobile Alliance, OMA-TSBCAST_ServiceGuide-V1_0, Candidate Version 1.0" and therefore description thereof is omitted.

The PDI-A (provider-side PDI-A) is stored in at least any one of "Service" fragment, "Schedule" fragment, and "Content" fragment among the elements configuring Service Guide shown in FIG. 32.

The "Service" fragment is metadata including control information relating to the contents of the channel service and FIG. 33 shows details of its configuration. In the "Service" fragment shown in FIG. 33, e.g. a "PDI-A" element is newly added to a "PrivateExt" element defined on the lowest line and thereby a PDI-A is stored there. Specifically, for example, the "PDI-A" element is so encoded as to be represented as a character string <xs:element name = "PDI-A" type = "xs:string" xmlns:xs = "http://www.w3.org/2001/XMLSchema"/> by the XML schema.

The "Schedule" fragment is metadata including control information relating to the distribution schedule of content (digital television program) and FIG. 34 shows details of its configuration. In the "Schedule" fragment shown in FIG. 34, e.g. a "PDI-A" element is newly added to a "PrivateExt" element defined on the lowest line and thereby a PDI-A is stored there. Specifically, for example, the "PDI-A" element is so encoded as to be represented as a character string <xs:element name = "PDI-A" type = "xs:string" xmlns:xs = "http://www.w3.org/2001/XMLSchema"/> by the XML schema.

The "Content" fragment is metadata including control information relating to the contents of content (digital television program) and FIG. 35 shows details of its configuration. In the "Content" fragment shown in FIG. 35, e.g. a "PDI-A" element is newly added to a "PrivateExt" element defined on the lowest line and thereby a PDI-A is stored there. Specifically, for example, the "PDI-A" element is so encoded as to be represented as a character string <xs:element name = "PDI-A" type = "xs:string" xmlns:xs = "http://www.w3.org/2001/XMLSchema"/> by the XML schema.

Furthermore, the PDI-Q is stored in an "Interactivity Data" fragment among the elements configuring Service Guide shown in FIG. 32.

The "Interactivity Data" fragment is metadata about an application relating to the channel service and content (television program) and FIG. 36 shows details of its configuration. In the "Interactivity Data" fragment shown in FIG. 36, a "PDI-Q" element is newly added to a "PrivateExt" element defined on the lowest line and thereby a PDI-Q is stored there. Specifically, for example, the "PDI-Q" element is so encoded as to be represented as a character string <xs:element name = "PDI-Q" type = "xs:string" xmlns:xs = "http://www.w3.org/2001/XMLSchema"/> by the XML schema.

In the above, the example in which the present technique is applied to a broadcast system carrying out broadcasting by the ATSC-M/H system is explained. However, it is also possible to apply it to a broadcast system carrying out NRT (Non-RealTime) broadcasting by the conventional ATSC system. In the NRT broadcasting, viewing content in real time is not premised and therefore content does not need to be reproduced in synchronization with the broadcast time of content broadcast as data by a broadcast signal.

### [Application Example to Broadcast System Carrying out NRT Broadcasting]

FIG. 37 shows the protocol stack in the signal of the broadcast wave transmitted in the NRT broadcasting. Although detailed description is omitted, "Physical Layer (physical layer)" is set as the lowest hierarchical layer and the frequency band of the broadcast wave corresponds to it. "MPEG2-TS" is set as the upper hierarchical layer adjacent to "Physical Layer" and the broadcast stream broadcast as the broadcast wave corresponds to it.

"ATSC-PSIP (Program and System Information Protocol)" and "MPEG2-PSI (Program Specific Information)" are shown as the upper hierarchical layer adjacent to "MPEG2-TS." "ATSC-PSIP" is set as a hierarchical layer having TVCT and "MPEG2-PSI" is set as a hierarchical layer having PAT (Program Association Table) and PMT (Program Map Table).

Furthermore, "DSM-CC (Digital Storage Media Command and Control) Addressable Section" is shown as the upper hierarchical layer adjacent to "MPEG2-TS." "DSM-CC Addressable Section" is used as an adaptation layer for transferring an IP packet on the MPEG2-TS of the broadcast stream.

FIG. 38 shows the data structure of TVCT, PAT, PMT, and DSM-CC Addressable Section. In the TVCT, control information relating to the broadcast stream broadcast by the MPEG2-TS is described. Based on the TVCT, the MPEG2-TS that transfers the DSM-CC Addressable Section for transferring an IP packet stream (UDP/IP Packets) is identified.

Referring back to FIG. 37, "IP" is shown as the upper layer adjacent to "DSM-CC Addressable Section" and furthermore "UDP" is shown as the upper layer adjacent to "IP."

"Service Signaling Channel" and "FLUTE/ALC (File Delivery over Unidirectional Transport/Asynchronous Layered Coding Protocol)" are shown as the upper hierarchical layer adjacent to "UDP." "Service Signaling Channel" is set as a hierarchical layer having SMT (Service Map Table) and NRT-IT (NRT Information Table). "FLUTE Session" is shown as the upper hierarchical layer adjacent to "FLUTE/ALC." "FLUTE Session" is set as a hierarchical layer having FLUTE-FDT (File Delivery Table) and A/V File (A/V file).

FIG. 39 shows the data structure of SMT, NRT-IT, and FLUTE FDT. Metadata relating to the channel is described in the SMT and metadata relating to content is described in the NRT-IT. The SMT and the NRT-IT are transferred by the above-described "Service Signaling Channel." In the FLUTE FDT, information for discriminating each of A/V files is described. The A/V file is transferred by the above-described "FLUTE/ALC."

Here, in the broadcast system carrying out the NRT broadcasting, the PDI-A (provider-side PDI-A) and the PDI-Q transmitted from the server 11 to the client 12 in the above-described broadcast system 10 are so transmitted as to be stored in the SMT or the NRT-IT.

Specifically, in the case of performing filtering of content to be distributed in units of channel (broadcast station), a "PDI descriptor" to store the PDI-A or the PDI-Q is newly defined in the descriptor loop of the service level of the SMT (in the diagram, lowest line of "Service #1").

Furthermore, in the case of performing filtering of content to be distributed in units of content, a "PDI descriptor" to store the PDI-A or the PDI-Q is newly defined in the descriptor loop of the service level of the NRT-IT (in the diagram, lowest line of "Content #1").

FIG. 40 shows an example of the syntax of "PDI descriptor." In FIG. 40, each of described descriptors is defined with the bit number (No. of Bits) and the format (Format).

According to the syntax shown in FIG. 40, the PDI-A or the PDI-Q is described in a descriptor "PDI_Q or PDI_A" that is a variable bit.

The syntax of "PDI descriptor" is not limited to the example shown in FIG. 40.

As above, it is also possible to apply the present technique to a broadcast system carrying out the NRT broadcasting.

The present technique may be applied to an information processing system that distributes content via a network besides the broadcast system carrying out broadcasting by the above-described ATSC-M/H system and a broadcast system carrying out broadcasting by a system other than the broadcast system carrying out the NRT broadcasting, of course.

The above-described series of processing can be executed by hardware and can also be executed by software. In the case of executing the series of processing by software, the program configuring the software is installed from a program recording medium into a computer incorporated in dedicated hardware or e.g. a general-purpose personal computer capable of carrying out various kinds of functions through installation of various kinds of programs.

The program recording medium storing the program that is installed into a computer and is set to the executable state by the computer is, as shown in FIG. 2, configured by the removable media 31 as package media formed of a magnetic disk (including a flexible disk), an optical disk (including CD-ROM (Compact Disc-Read Only Memory) and DVD (Digital Versatile Disc)), a magnetooptical disk, a semiconductor memory, or the like, the ROM 22, in which the program is temporarily or permanently stored, the hard disk configuring the storing section 28, or the like. Storing of the program in the program recording medium is carried out by utilizing a wired or wireless communication medium such as a local area network, the Internet, or digital satellite broadcasting via the communication section 29 as the interface of a router, a modem, etc. according to need.

In the present specification, the steps that describe the program include also processing that is not necessarily processed in a time-series manner but executed in parallel or individually as well as processing executed in a time-series manner along the described order.

Furthermore, in the present specification, the system means a collection of plural constituent elements (devices, modules (parts), etc.) and is irrespective of whether or not all constituent elements exist in the same chassis. Therefore, plural devices that are housed in separate chassis and are connected via a network and one device in which plural modules are housed in one chassis are both a system.

Embodiments of the present technique are not limited to the above-described embodiment and various changes are possible in such a range as not to depart from the gist of the present technique.

For example, the present technique can employ a configuration of cloud computing to process one function by plural devices via a network in a sharing and cooperative manner.

Furthermore, the respective steps explained in the above-described flowcharts can be carried out by plural devices in a sharing manner besides being carried out by one device.

Moreover, if plural kinds of processing are included in one step, the plural kinds of processing included in this one step can be executed by plural devices in a sharing manner besides being executed by one device.

### [Reference Signs List]

10 Broadcast system, 11 Server, 12 Client, 41 PDI-Q generator, 42 Communication section, 43 PDI-A generator, 44 Metadata distributor, 45 Content accumulator, 46 Content distributor, 51 Communication section, 52 PDI-A generator, 53 PDI store, 54 Content filter, 55 Content reproducer, 56 Content accumulator, 111 PDI application, 112 PDI API

## Claims

1. An information processing device comprising:
a receiving section that receives question information that is transmitted from a server and represents a question about a preference of a user;
a processing executing section that generates user-side answer information representing an answer of the user to the question and stores the user-side answer information in an accumulator in which the question information is stored; and
a matching section that acquires content distributed from the server by performing matching between the user-side answer information and provider-side answer information that is transmitted from the server and represents an answer set to the question by a provider that provides the content, wherein
the processing executing section performs at least readout or update of the question information and/or the user-side answer information stored in the accumulator.

2. The information processing device according to claim 1,
wherein
the processing executing section is provided as a Web application and performs at least readout or update of the question information and/or the user-side answer information stored in the accumulator by calling a predetermined API (Application Programming Interface).

3. The information processing device according to claim 2,
wherein
one or more pieces of the question information and/or the user-side answer information are stored in the accumulator as one table.

4. The information processing device according to claim 3,
wherein
the processing executing section performs readout or removal of the table that corresponds based on a table ID to identify the table.

5. The information processing device according to claim 3,
wherein
the processing executing section performs generation or update of the table depending on presence or absence of the table in the accumulator, and
a version of the table updated is updated.

6. The information processing device according to claim 3,
wherein
the processing executing section performs readout of the question information and/or the user-side answer information that corresponds based on a question information ID to identify the question information.

7. The information processing device according to claim 3,
wherein
the processing executing section performs update of only the user-side answer information depending on presence or absence of the question information and/or the user-side answer information in the accumulator, and
a version of the table including the user-side answer information updated is not updated.

8. The information processing device according to claim 2,
wherein
a session of the accumulator is established with only one of the Web application.

9. The information processing device according to claim 1,
further comprising
the accumulator.

10. An information processing method comprising the steps of:
receiving question information that is transmitted from a server and represents a question about a preference of a user;
generating user-side answer information representing an answer of the user to the question and storing the user-side answer information in an accumulator in which the question information is stored; and
acquiring content distributed from the server by performing matching between the user-side answer information and provider-side answer information that is transmitted from the server and represents an answer set to the question by a provider that provides the content, wherein
at least readout or update of the question information and/or the user-side answer information stored in the accumulator is performed.

11. An information processing system that is a transmitting/receiving system composed of a transmitting device that distributes content and a receiving device that acquires the content distributed from the transmitting device, wherein
the transmitting device includes
question generating means for generating question information that is information representing a question about a preference of a user of the receiving device, and transmitting means for transmitting, to the receiving device, the question information and provider-side answer information representing an answer set to the question by a provider that provides the content,
the receiving device includes
a receiving section that receives the question information transmitted from the transmitting device,
a processing executing section that generates user-side answer information representing an answer of the user to the question and stores the user-side answer information in an accumulator in which the question information is stored, and
a matching section that acquires the content distributed from the transmitting device by performing matching between the user-side answer information and the provider-side answer information transmitted from the transmitting device, and
the processing executing section performs at least readout or update of the question information and/or the user-side answer information stored in the accumulator.
